# EUROPÄISCHE PATENTSCHRIFT

(11) **EP 2 830 825 B1**
(45) Veröffentlichungstag und Bekanntmachung des Hinweises auf die Patenterteilung: **23.03.2016**
(21) Anmeldenummer: 13718515.3
(22) Anmeldetag: 27.03.2013
(51) Int. Cl.: B23Q 3/154, B23Q 3/18

(54) **MAGNETSPANNVORRICHTUNG**
MAGNETIC CLAMPING DEVICE
DISPOSITIF DE FIXATION MAGNÉTIQUE

(30) Priorität: 27.03.2012 DE 202012101102 U; 15.05.2012 US 201261647118 P
(43) Veröffentlichungstag der Anmeldung: 04.02.2015
(73) Patentinhaber: Wagner Magnete GmbH & Co. KG, 87751 Heimertingen (DE); Röhm GmbH, 89567 Sontheim/Brenz (DE)
(72) Erfinder: WEINBUCH, Rudolf, 88299 Leutkirch (DE); BARABASS, Stefan, 86690 Mertingen (DE)
(74) Vertreter: Baumann, Rüdiger Walter
(86) Internationale Anmeldenummer: PCT/EP2013/056571
(87) Internationale Veröffentlichungsnummer: WO 2013/144233

(56) Entgegenhaltungen:
- WO-A1-2009/049569
- US-A- 2 769 642

## Beschreibung

Die Erfindung betrifft eine Magnetspannvorrichtung mit einer Spannfläche, wenigstens einem elektromagnetischen Spannmittel zum Aufspannen eines Werkstückes in der Spannfläche und einer Zentriervorrichtung zum Zentrieren des Werkstückes, wobei die Zentriervorrichtung wenigstens eine in der Spannfläche verschiebbare Grundspannbacke aufweist.

Derartige Magnetspannvorrichtungen, die auch als Hybridspannfutter bezeichnet werden, sind im Stand der Technik, beispielsweise aus der WO2009/049569 bekannt und verbinden magnetische Spannmittel mit mechanischen Spannmitteln. Werkstücke werden mittels der mechanischen Spannmittel, das heißt der Zentriervorrichtung oder einer darin vorgesehenen Grundspannbacke auf der Spannfläche zentriert. Nach der Zentrierung wird das Werkstück mit dem magnetischen Spannmittel gespannt. Nach diesem Spannen werden die Spannbacken des mechanischen Spannmittels entlastet und vom Werkstück beabstandet positioniert. Die Spannbacken verbleiben jedoch in der Ebene der Spannfläche.

Während der Bearbeitung verbleiben die Spannbacken des mechanischen Spannfutters in der Regel im Bereich des Werkstückes. Insbesondere bei einer 3-Seitenbearbeitung des Werkstückes erweist sich dies als nachteilig, da aufgrund der Spannmittel ein freier Zugriff auf das Werkstück nicht mit jedem Werkzeug möglich ist. Dies liegt darin begründet, dass bei in Endlage befindlichen Spannbacken des mechanischen Spannmittels der sich dann ergebende Abstand zwischen Werkstück und Spannbacke in der Regel den maximal möglichen Durchmesser des Werkzeuges beschreibt.

Nachteilig an bekannten Magnetspannvorrichtungen ist, dass sich die Spannbacken als für die Bearbeitung insbesondere 3-Seitenbearbeitung hinderlich erweisen.

Aufgabe der vorliegenden Erfindung ist es, eine Magnetspannvorrichtung zur Verfügung zu stellen, die die ungehinderte 3-Seitenbearbeitung eines Werkstückes ermöglicht.

Diese Aufgabe wird gelöst durch die eingangs beschriebene Mag netspannvorrichtung. Die erfindungsgemäße Magnetspannvorrichtung zeichnet sich dadurch aus, dass der wenigstens einen Grundspannbacke eine relativ zur Spannfläche bewegbare, insbesondere verschiebliche Spannbacke zugeordnet ist. Die bewegbare Spannbacke kann nach Bedarf über die Ebene einer Spann- bzw. Auflagefläche ausgefahren oder unter diese abgesenkt werden. Somit wird, nachdem die Zentriervorrichtung eine Zentrierung des Werkstückes vorgenommen hat, die Spannbacke aus dem Eingriffsbereich eines Werkzeuges vom Werkstück entfernt und erweist sich hier nicht mehr als störend. Die Werkzeugauswahl ist somit nicht mehr auf den maximal verwendbaren, vom Abstand zwischen Werkstück und Spannbacke vorgegebenen Durchmesser begrenzt.

Im Zusammenhang mit der vorliegenden Erfindung bezeichnet der Begriff "Spannfläche" zum einen die im Wesentlichen dimensionslose Ebene der Spann- bzw. Magnetspannvorrichtung auf bzw. in der das Werkstück aufgespannt bzw. gespannt wird, um eine Bearbeitung durchzuführen. Die Spannfläche bezeichnet jedoch auch die obere Abschluss- bzw. Begrenzungsfläche eines die Magnetspannvorrichtung bildenden geometrischen Körpers. Auf der Spannfläche angeordnet werden können zusätzlich Polschuhe als Distanzstücke zwischen der Magnetfläche beziehungsweise der Spannfläche und dem Werkstück. Die Polschuhe dienen neben der Beabstandung auch dazu, die magnetischen Feldlinien des Permanentmagneten beziehungsweise des Elektromagneten der Spannfläche in einer definierten Form austreten zu lassen und zu verteilen.

Nachfolgend wird die Erfindung im Zusammenhang mit einem elektromagnetischen Spannmittel beschrieben. In gleicher Weise realisiert werden kann die Erfindung jedoch bei Verwendung von Elektro-Permanentmagneten. Beide Ausführungsformen beziehungsweise Kombinationen aus diesen sind von der Erfindung umfasst.

Die ein wesentliches Merkmal der erfindungsgemäßen Magnetspannvorrichtung darstellende Absenkbarkeit bzw. Anlenkbarkeit der Spannbacke bzw. die Spannbacke tragende Zentriervorrichtung, Grundspannbacke oder Aufsatzbacke wird daher dadurch erreicht, dass die Spannbacke tragende Zentriervorrichtung, Grundspannbacke oder Aufatzbacke in eine relativ zum geometrischen Körper zugehende Position gebracht wird. Aus der Ausformung des geometrischen Körpers bzw. der Tatsache, dass dieser eine als Ebene erfassbare Oberfläche bzw. Abschlussfläche aufweist, kann im Zuge dessen ein Anheben oder Absenken in einer Position ober- oder unterhalb, das heißt, in den geometrischen Körper hinein oder aus diesem heraus durchgeführt werden.

Die Beweglichkeit der Spannbacke wird bevorzugt pneumatisch, hydraulisch, mechanisch, magnetisch oder elektrisch bzw. über einen elektromotorischen Antrieb realisiert. Die Erfindung bleibt hierauf jedoch nicht beschränkt.

In einer als vorteilhaft angesehenen Weiterbildung ist vorgesehen, dass zwischen der Grundspannbacke und der Spannbacke eine Aufsatzbacke angeordnet ist. Diese Aufsatzbacke bietet eine weitere Einstellmöglichkeit für die Spannbacke bzw. Zentriervorrichtung. Zudem kann die Aufsatzbacke dazu verwendet werden, eine Justierung bzw. Zentrierung der Spannbacke vorzunehmen. Die Aufsatzbacke kann allerdings auch den Antrieb für die Spannbacke aufweisen bzw. aufnehmen. Insgesamt wird durch die auf der Grundbacke aufsetzbare Aufsatzbacke eine größere Variabilität der gesamten Zentriervorrichtung und damit der Magnetspannvorrichtung als solcher erreicht. Eine wesentlich bessere Anpassung an verschiedene Spannaufgaben wird somit möglich. Des Weiteren kann in einer Grundausstattung der Magnetspannvorrichtung diese mit eingebauter Grundspannbacke angeboten werden. Eine Anpassung an die Verwendungszwecke. erfolgt dann über Aufsatzbacke bzw. damit verbundener oder verbindbarer Spannbacke.

Als günstig wird angesehen, wenn die Spannbacke einen gesonderten Antrieb, insbesondere einen pneumatischen, hydraulischen, mechanischen, magnetischen, insbesondere elektromagnetischen, elektromotorischen oder manuellen Hubantrieb aufweist. Dieser Hubantrieb kann der Spannbacke direkt zugeordnet werden, daneben besteht selbstverständlich auch die Möglichkeit, dass in Grundspannbacke oder Aufsatzbacke ein entsprechender Hubantrieb zur Verfügung gestellt und bedarfsweise mit der Spannbacke verbunden wird, um diese für die Spann- und Zentrieraufgabe anzutreiben und gemäß der zuvor beschriebenen Ausführungsform der Magnetspannvorrichtung zu bewegen.

Mit der erfindungsgemäßen, zuvor und nachfolgend beschriebenen Vorrichtung lässt sich ein Spannverfahren durchführen, bei dem ein Werkstück, das auf einer Spannfläche einer Magnetspannvorrichtung angeordnet ist, zunächst durch eine Zentriervorrichtung bezüglich der Achse der Spannvorrichtung ausgerichtet wird. Hierzu wird die eigentliche Zentriervorrichtung, die als Einheit oder als aus einzelnen Einheiten gebildete Vorrichtung zur Verfügung gestellt werden kann, aus der Ebene der Spannfläche angehoben und an das Werkstück herangeführt. Dies erfolgt durch synchrone Radialbewegung der Zentriervorrichtung beziehungsweise der dort angeordneten Spannbacken. Durch die synchrone Bewegung der Zentriervorrichtung erfolgt eine Zentrierung des Werkstückes. Nach dem Zentrieren wird das Werkstück mittels der elektromagnetischen Spannvorrichtung auf der Spannfläche aufgespannt. Gleichzeitig mit dem Spannen oder nach Abschluss des elektromagnetischen Spannvorganges wird die Zentriervorrichtung wieder in die Spannfläche abgesenkt und somit vom Werkstück entfernt. Die Erfindung umfasst dabei gleichermaßen Vorrichtungen, bei denen ein Absenken der Zentriervorrichtung vor dem Magnetspannen oder aber erst nach dem Magnetspannen erfolgt. Um das Absenken der Zentriervorrichtung beziehungsweise der Spannbacke wesentlich zu vereinfachen, kann vorgesehen werden, dass vor dem Absenken der Zentriervorrichtung ein Entspannen der Spannbacke erfolgt. Dies wird realisiert durch eine zur Spannbewegung gegenläufige Radialbewegung der Spannbacke beziehungsweise der diese tragenden Zentriervorrichtung. Dabei wird die Spannbacke vom Werkstück abgehoben und berührt dieses nicht mehr. Erst nach diesem Entspannvorgang wird dann ein Absenken der Zentriervorrichtung durchgeführt. Sämtliche hier beschriebene Bewegungsabläufe beziehungsweise Verfahrensschritte können mit der erfindungsgemäßen Magnetspannvorrichtung durchgeführt werden, wobei die Abfolge der Schritte beliebig austauschbar sind, insbesondere was das Absenken und/oder magnetische Spannen oder Entspannen der Zentriervorrichtung betrifft. Sämtliche Ausführungsformen lassen sich mit der nachfolgenden und zuvor beschriebenen Magnetspannvorrichtung realisieren und sind daher von der Erfindung umfasst.

Für die Zentrierung des Werkstücks von zentraler Bedeutung ist die Beweglichkeit der Grundspannbacke bzw. der Aufsatzbacke oder der mit Grundspannbacke und/oder Aufsatzbacke verbundenen Spannbacke. Um eine Zentrierung des auf der Spannfläche positionierten Werkstückes durchzuführen, wird es als vorteilhaft angesehen, wenn die Grundspannbacke, die Aufsatzbacke und/oder die Spannbacke radial beweglich ausgebildet und/oder in oder unterhalb der Spannfläche angeordnet ist/sind. Zum Zentrieren des Werkstückes vor dem eigentlichen Spannen kann somit eine Radialbewegung der Grundspannbacke in der Spannfläche bzw. der Ebene der Spannfläche erfolgen. Bei Erreichen einer definierten Position, die abhängig ist vom zu zentrierenden bzw. spannenden Werkstück kann dann ein Anheben der Spannbacke und/oder der Grundspannbacke bzw. der Aufsatzbacke erfolgen, um letztendlich durch eine erneute Radialbewegung in entgegengesetzter Richtung ein Zentrieren und Vorspannen des Werkstücks in der Ebene der Spannfläche der Magnetspannvorrichtung durchzuführen. Nach Ende der Zentrierung wird dann wieder eine Radialbewegung durchgeführt, an deren Ende eine Absenkbewegung bzw. negative oder entgegengesetzte Hubbewegung der Grundspannbacke, Aufsatzbacke und/oder der Spannbacke steht, um diese Zentriermittel bzw. die gesamte Zentriervorrichtung in eine Position in oder unterhalb der Spannfläche bzw. in den Grundkörper der Magnetspannvorrichtung hinein abzusenken und somit die Zugriffsmöglichkeiten eines Werkstückes wie eingangs beschrieben wesentlich zu verbessern.

Die Spannfläche stellt gleichzeitig eine Auflagefläche für ein zu bearbeitendes Werkstück zur Verfügung und trägt bzw. beinhaltet die magnetischen Spannmittel der Magnetspannvorrichtung. Diese sind ebenfalls in der Spannfläche angeordnet bzw. in diese ganz oder teilweise eingesenkt.

Die Aufsatzbacke und/oder die Spannbacke oder eine aus Aufsatzbacke und Spannbacke gebildete Einheit ist bevorzugt lösbar fest in der Grundspannbacke und/oder der Aufsatzbacke angeordnet. Die Grundspannbacke kann somit in der Magnetspannvorrichtung verbleiben. Eine Funktionalisierung bzw. Anpassung der Zentriervorrichtung erfolgt dann lediglich über die Aufsatzbacke bzw. die Spannbacke oder die daraus gebildete Einheit, die bedarfsweise mit der Grundspannbacke verbunden bzw. auf dieser - wie durch das Werkstück vorgegeben - positioniert wird.

Die erfindungsgemäße Magnetspannvorrichtung sieht vor, dass der Spannbacke ein Antrieb für eine (positive oder negative) Bewegung bzw. eine Hebe- oder Senkbewegung zugeordnet ist. Als günstig wird in diesem Zusammenhang angesehen, wenn der der Spannbacke zugeordnete Antrieb bzw. ein Betätigungsmechanismus in der Grundspannbacke und/oder der Aufsatzbacke angeordnet ist. Die derart ausgestattete Magnetspannvorrichtung stellt somit die Möglichkeit zur Anordnung verschiedenster Spannbacken zur Verfügung, die alle über den gleichen Antrieb bzw. Mechanismus bewegbar sind. Es wird hierdurch die Möglichkeit geschaffen, in vorteilhafter Weise eine Anpassung der Magnetspannvorrichtung durchzuführen, indem nur die jeweilige Spannbacke ersetzt werden muss, die Zentriervorrichtung im Übrigen jedoch unverändert bleibt. Die übrigen Bestandteile der Zentriervorrichtung, insbesondere der Antrieb, verbleibt in der Magnetspannvorrichtung.

Die Zentriervorrichtung ist in einer vorteilhaften Weiterbildung der Erfindung aus Grundspannbacke, Aufsatzbacke und Spannbacke gebildet. Die gesamte Zentriervorrichtung kann in einfacher Art und Weise ausgetauscht oder ersetzt werden. Die drei genannten Teile der Zentriervorrichtung können auch in einer einzigen Einheit zusammengefasst, das heißt, gefügt sein. Hierdurch werden insbesondere Vorteile bei der Wartung, Installation und beim Austausch der Zentriervorrichtung realisiert, da lediglich ein Bauteil aus der Magnetspannvorrichtung entnommen bzw. in diese im Austausch wieder eingesetzt werden muss.

Die als Einheit ausgebildete Zentriervorrichtung kann bevorzugt einen der Zentriervorrichtung zugeordneten Hubantrieb aufweisen. Dies bedeutet, dass zum Zentrieren des Werkstückes die gesamte Zentriervorrichtung umfassend Grundspannplatte, Aufsatzbacke und Spannbacke aus einer Position unterhalb der Spannfläche ausgehoben wird. Die Hubbewegung, ebenso wie die der Zentrierung des Werkstücks nachfolgende Absenkbewegung wird über den Hubantrieb realisiert. Nach dem Zentrieren des Werkstücks, beispielsweise durch radiale Bewegung der Zentriervorrichtung in der Spannfläche wird dann die gesamte Einheit wieder in eine Position unterhalb der Spannfläche bzw. in die Spannfläche oder den die Magnetspannvorrichtung bildenden Körper abgesenkt und danach ein elektromagnetisches Aufspannen des Werkstückes in der Spannfläche der Magnetspannvorrichtung durchgeführt. Selbstverständlich kann vor dem Absenken der Zentriervorrichtung ein Lösen beziehungsweise Abheben der Spannbacken von dem Werkstück erfolgen, indem eine radial vom Werkstück weggerichtete Bewegung der Zentriervorrichtung vor dem eigentlichen Absenken durchgeführt wird.

Die Zentriervorrichtung als Gesamteinheit ist bevorzugt radial beweglich in oder unterhalb der Spannfläche bzw. Spannflächenebene, das heißt, im Wesentlichen im Innern der Magnetspannvorrichtung bzw. dem die Spannflächen zur Verfügung stellenden Grundkörper der Magnetspannvorrichtung angeordnet. Die Spannbacke oder aber auch die gesamte Zentriervorrichtung ist in diesem Zusammenhang insbesondere in eine Position in oder oberhalb der Ebene der Spannfläche anhebbar, was durch den zuvor bereits ausführlich beschriebenen Hubantrieb in seinen diversen Ausführungsformen realisiert werden kann. Hierbei sind beide Varianten von der Erfindung umfasst. In einer ersten Variante ist lediglich die Spannbacke anhebbar, während in einer weiteren, gleichermaßen von der Erfindung umfassten zweiten Variante die gesamte Zentriervorrichtung bzw. die Grundspannbacke, die Aufsatzbacke oder eine Kombination dieser Elemente nach Radial bewegung durch den Hubantrieb anhebbar bzw. nach Abschluss des Zentrierens wieder absenkbar ausgebildet ist.

Hierzu ist bevorzugt ein der Grundspannbacke zugeordneter Hubantrieb vorgesehen. Alternativ besteht selbstverständlich die Möglichkeit, dass die Grundspannbacke lediglich die Aufnahme bzw. die Halterung für den Hubantrieb darstellt und der eigentliche Hubantrieb der die Spannbacke tragenden Aufsatzbacke zugeordnet ist.

In einer weiteren Ausführungsform der erfindungsgemäßen Magnetspannvorrichtung, die als vorteilhaft angesehen wird, ist vorgesehen, dass die die Spannbacke tragende Aufsatzbacke radial in der Spannfläche bewegbar ist. Die Aufsatzbacke wird dann relativ zur Grundspannbacke radial bewegt und vermittelt ein Zentrieren des Werkstückes über die von der Aufsatzbacke getragene Spannbacke.

Um die Flexibilität der Magnetspannvorrichtung zu erweitern bzw. um eine Anpassung an die zu zentrierenden Werkstücke, beispielsweise über den äußeren Umfang der Werkstücke oder durch Eingriff der Spannmittel bzw. der Spannvorrichtung an einem Innenumfang des Werkstückes zu verbessern, wird es als vorteilhaft angesehen, wenn die Grundspannbacke und/oder die Aufsatzbacke wenigstens eine Aufnahme für die Spannbacke aufweisen. Diese Aufnahme kann in der Aufsatzbacke selbst angeordnet werden oder aber sich zwischen Grundspannbacke und Aufsatzbacke erstrecken. Eine als günstig angesehene Weiterbildung sieht vor, dass die Grundspannbacke und/oder die Aufsatzbacke wenigstens zwei Aufnahmen für die Spannbacke aufweist/aufweisen, insbesondere wobei die Aufnahmen über die radiale Länge der Grundspannbacke bzw. der Aufsatzbacke gleichmäßig beabstandet vorgesehen sind. Die Grundspannbacke bzw. Aufsatzbacke stellen somit eine Möglichkeit zur Verfügung, um eine variable Anordnung der Spannbacke vorzunehmen und somit eine Anpassung der Zentriervorrichtung an das jeweils zu zentrierende Werkstück bzw. die Angriffsposition der Spannbacke am Werkstück durchzuführen.

In der zuvor beschriebenen bevorzugten Ausführungsform der Magnetspannvorrichtung mit jeweils der Grundspannbacke bzw. der Aufsatzbacke zugeordneter bzw. zugeordneten Aufnahmen wird es als günstig angesehen, wenn in oder bei jeder Aufnahme ein Hubantrieb für die Spannbacke vorgesehen ist. Selbstverständlich besteht hier die Möglichkeit, dass ein zentraler Hubantrieb für die Spannbacke angeordnet ist, und der eigentliche Hub der Spannbacke unabhängig von der Position der Spannbacke auf bzw. in der Grundspannbacke und/oder Aufsatzbacke ist.

Die Spannbacke ist bevorzugt in der Aufnahme lösbar fest anbringbar, insbesondere kann diese in die Aufnahme eingesetzt, eingeklemmt, eingeschraubt oder eingesteckt ausgebildet sein. Die Aufnahme kann ebenfalls verschiedene Ausführungsformen aufweisen. So kann eine Ausführungsform als Sacklochbohrung vorgesehen werden. Daneben besteht die Möglichkeit, dass in der Aufnahme ein Gewinde zum Einschrauben der Spannbacke bzw. einer die Spannbacke aufnehmenden Vorrichtung vorgesehen ist. Auch denkbar ist eine Ausführung der Aufnahme mit einem Bajonettverschluss oder einer sonstigen Klemm-, Rast- oder Ratschverbindung.

Die erfindungsgemäße Magnetspannvorrichtung sieht vor, dass die Spannbacke oder die Zentriervorrichtung einen Betätigungsmechanismus aufweist. Dieser Betätigungsmechanismus verfügt über wenigstens ein manuell oder motorisch betätigbares Hubelement und ein mit dem Hubelement verbundenes, eine Bewegung des Hubelements in eine gegenläufige Hubbewegung der Spannbacke oder der Zentriervorrichtung umsetzendes Führungselement. In einer in diesem Zusammenhang als günstig angesehenen Weiterbildung ist der Betätigungsmechanismus mit einem pneumatisch oder hydraulisch beaufschlagbaren, insbesondere in einem Kolbenraum geführten Kolbenelement ausgebildet. Ein mit dem Kolbenelement verbundenes Führungselement setzt eine Bewegung des Kolbenelementes, beispielsweise eine Hub- oder Absenkbewegung des Kolbenelementes in eine gegenläufige Hubbewegung der Spannbacke um. Dies bedeutet, dass bei pneumatischer oder hydraulischer Beaufschlagung des Kolbenelements eine Hubbewegung erfolgt. Durch das Führungselement kann diese Hubbewegung dazu verwendet werden, die Spannbacke oder die Zentriervorrichtung aus einer Position unterhalb oder in der Spannfläche in eine Position oberhalb oder auf der Spannfläche umzusetzen. Im Gegenzug wird - beispielsweise nach Ende der Druckbeaufschlagung des Kolbenelements eine gegenläufige Bewegung der Spannbacke initiiert und diese in die Spannfläche bzw. in eine Position unterhalb der Spannfläche abgesenkt.

Eine als vorteilhaft angesehene Weiterbildung der Erfindung sieht vor, dass die zuvor beschriebenen Aufnahmen in Grundspannbacke oder Aufsatzbacke einen gemeinsamen Hubantrieb für die Spannbacke bzw. die Aufsatzspannbacke aufweisen.

Der die Spannbacke anhebende bzw. absenkende oder der Grundspannbacke bzw. Aufsatzbacke zugeordnete Hubantrieb ist in einer als vorteilhaft angesehenen Weiterbildung als eine eine Zwangsführung der Spannbacke bzw. Zentriervorrichtung vermittelnde Scheibe ausgebildet. Die Spannbacke ist in diesem Zusammenhang bevorzugt exzentrisch an der Scheibe angelenkt, wobei eine Drehung der Scheibe in eine im Wesentlichen axiale Bewegung der Spannbacke umgesetzt wird. Eine in diesem Zusammenhang alternative Ausführungsform der Scheibe sieht vor, dass diese eine spiralartige, das Scheibenzentrum umgebende Führungskulisse aufweist, in der die Spannbacke bzw. deren der Scheibe zugeordnetes Ende geführt ist. Bei Drehung der Scheibe bewirkt die Führungskulisse ein Anheben bzw. eine Axialbewegung der Spannbacke. Bei gegenläufiger Drehung der Scheibe wird, vermittelt durch die Führungskulisse, die Spannbacke abgesenkt. Die Spannbacke kann somit allein durch die Scheibendrehung in die Anheb- bzw. Absenkposition verbracht werden.

Als in diesem Zusammenhang günstig wird angesehen, wenn die Scheibe über eine Zugstange antreibbar ist. Die Zugstange ist günstiger Weise auf der bevorzugt radial verschiebbaren Grundbacke oder Aufsatzbacke angeordnet. An eine radiale Bewegung der Grundbacke oder Aufsatzbacke wird somit gleichzeitig in eine Hubbewegung der Zugstange umgesetzt, wobei Hubbewegung (auf und ab) und radiale Bewegung immer in Bezug auf die Magnetspannvorrichtung bzw. die Spannfläche oder deren Ebene zu verstehen ist.

Die Scheibe kann in einer Weiterbildung als Zahnscheibe ausgebildet sein, wobei die Zugstange dann als mit der Zahnscheibe in Eingriff stehende Zahnstange ausgebildet ist.

Grundsätzlich zeichnet sich die erfindungsgemäße Magnetspannvorrichtung dadurch weiter aus, dass eine radiale Bewegung der Grundbacke und/oder der Aufsatzbacke relativ zur Spannfläche in eine relativ zur Spannfläche gesehen axiale Bewegung der Spannbacke umsetzbar ist. Selbstverständlich umfasst diese Ausführungsform der Magnetspannvorrichtung auch gesonderte Hubantriebe, bei denen eine rotatorische oder translatorische Bewegung des Hubantriebes bzw. einzelner Elemente des Hubantriebes in eine relativ zur Spannfläche gesehen axiale Bewegung der Spannbacke umsetzen. Eine im Zusammenhang mit der Ausführung des Hubantriebs mit einer Scheibe stehende bevorzugte Ausführungsform sieht vor, dass die Spannbacke im Scheibenzentrum festgelegt ist und eine Umsetzung einer Drehbewegung der Scheibe in eine Schwenkbewegung der Spannbacke durchgeführt wird. Somit wird die Spannbacke von einer ersten, Ruhe- oder Absenkposition in die Zentrierfunktion verschwenkt, was durch eine Bewegung der Scheibe vermittelt wird.

Eine alternative Ausgestaltungsform der Magnetspannvorrichtung sieht vor, dass als Hubantrieb ein Elektromagnet vorgesehen ist. Dieser weist einen bei Bestromung des Elektromagneten in einem Ankerraum beweglichen Anker auf, wobei der Anker als Spannbacke ausgebildet ist oder die Spannbacke trägt. Bei Bestromung des Elektromagneten wird der Anker angezogen und somit die Spannbacke bewegt, beispielsweise in eine Position oberhalb der Spannfläche verbracht. Nach Ende der Bestromung fällt der Anker vom Elektromagneten ab und führt somit die Spannbacke in ihre Ausgangs- oder Grundposition in oder unterhalb der Spannfläche zurück. Selbstverständlich ist auch der umgekehrte Fall von der Erfindung umfasst, das heißt, die Bestromung des Elektromagneten bewirkt ein Absenken der Spannbacke durch entsprechende Positionierung des Ankers. Eine Weiterbildung sieht vor, dass dem Anker eine Rückstellfeder zugeordnet ist und der Anker bei Bestromung des Elektromagneten entgegen der Rückstellkraft der Feder im Ankerraum bewegbar ist.

Der Hubantrieb kann in diesem Zusammenhang einen gesonderten Elektromagneten aufweisen. Als günstig und vorteilhaft wird des Weiteren angesehen, wenn eine Kopplung des Hubantriebes der Spannbacke mit einem elektromagnetischen Spannmittel der Magnetspannvorrichtung vorgesehen ist. Hierbei wird insbesondere mit einer Aktivierung der Magnetspannvorrichtung die Spannbacke in eine Position in oder unterhalb der Spannfläche abgesenkt. Ein gesonderter Elektromagnet, der die Absenkung der Spannbacke bewirkt, ist somit nicht notwendig. Zuvor werden die einzelnen Hubantriebe im Zusammenhang mit den Spannbacken beschrieben. Die Hubantriebe können selbstverständlich auch den Aufsatzbacken bzw. der Grundspannbacke zugeordnet sein, die dann die eigentliche Spannbacke, die zum Zentrieren des Werkstücks verwendet wird, tragen. Die Erfindung umfasst gleichermaßen auch diese Ausführungsformen.

Die Erfindung umfasst gleichermaßen ein Verfahren zum Zentrieren eines Werkstückes in der Spannfläche einer Magnetspannvorrichtung, insbesondere einer Magnetspannvorrichtung wie zuvor beschrieben.

Das Verfahren umfasst die folgenden Schritte:
(i) Auflegen des Werkstücks auf einer Spannfläche,
(ii) Zentrieren des Werkstücks in der Spannfläche durch Verschieben der Spannbacke auf das Werkstück bzw. den Rand des Werkstücks zu,
(iii) elektromagnetisches Spannen des Werkstücks,
(iv) Absenken der Spannbacke in eine Position in oder unterhalb der Ebene der Spannfläche.

In einer Weiterbildung des erfindungsgemäßen Verfahrens ist vorgesehen, dass vor dem Schritt des Absenkens der Spannbacke in eine Position in oder unterhalb der Ebene der Spannfläche ein Entspannen erfolgt, das heißt, dass die Spannbacke von dem Werkstück gelöst wird. Dies kann durch zur Spannbewegung gegenläufige Radialbewegung der Spannbacke in der Spannfläche erfolgen. In dieser Ausführungsform des erfindungsgemäßen Verfahrens wird somit vor oder nach dem elektromagnetischen Spannen des Werkstückes eine Radialbewegung der Zentriervorrichtung durchgeführt, auf die dann erst eine Absenkbewegung erfolgt.

Die Erfindung umfasst auch eine Variante des Verfahrens, bei dem vor dem Absenken der Spannbacke in eine Position in oder unterhalb der Ebene der Spannfläche ein elektromagnetisches Spannen des Werkstückes durchgeführt wird. Gleichermaßen umfasst ist eine Durchführung des Schrittes des Absenkens der Spannbacke in eine Position in oder unterhalb der Ebene der Spannfläche vor dem elektromagnetischen Spannen des Werkstückes oder auch während des Spannens.

Das erfindungsgemäße Verfahren hat den Vorteil, dass während der Bearbeitung des Werkstücks die für die Zentrierung notwendige, jedoch aufgrund der magnetischen Spannmittel der Magnetspannvorrichtung für das Halten des Werkstücks nicht notwendige Spannbacke außerhalb des Eingriffsbereichs eines Werkzeuges in das Werkstück liegt. Die dreiseitige Bearbeitung von Werkstücken wird somit wesentlich verbessert. Vor dem Schritt des Zentrierens des Werkstücks in der Spannfläche kann bevorzugt ein Anheben der Spannbacke aus einer Position in oder unterhalb der Ebene der Spannfläche in eine Position auf oder oberhalb der Spannfläche vorgesehen werden. Dies bedeutet, dass die Spannbacke bzw. die gesamte für die Zentrierung des Werkstückes vorgesehene Zentriervorrichtung nur bedarfsweise aus der Spannfläche angehoben wird, um die Zentrieraufgabe durchzuführen. Das Anheben kann selbstverständlich auch bereits vor dem Auflegen des Werkstücks erfolgen, sofern die Werkstückdimensionen bekannt oder voreingestellt sind. Hierdurch wird das Zentrieren des Werkstücks beschleunigt. Das Zentrieren erfolgt durch radiale Verschiebung der Spannbacke und/oder einer die Spannbacke tragenden Grundbacke oder Aufsatzbacke der Zentriervorrichtung. Die Bewegung der Spannbacke erfolgt dabei bevorzugt durch einen gesonderten Antrieb. Es besteht jedoch auch die Möglichkeit, dass eine radiale Bewegung der Grundbacke und/oder der Aufsatzbacke relativ zur Spannfläche in eine relativ zur Spannfläche gesehene Hub- oder Absenkbewegung der Spannbacke umgesetzt wird. Hierzu weist die Spannbacke bzw. die Grundbacke oder Aufsatzbacke einen entsprechenden Antrieb auf bzw. verfügt über Möglichkeiten einer Umsetzung der Bewegungen. Die Bewegung der Spannbacke ist dabei bevorzugt aus der Bewegung der Grundbacke und/oder der Aufsatzbacke ableitbar. Eine bevorzugte Ausführungsform sieht vor, dass eine pneumatisch, hydraulisch, mechanisch, magnetisch, insbesondere elektromagnetisch, elektromotorisch oder manuell vermittelte Hub- und/oder Radialbewegung der Grundbacke, der Aufsatzbacke und/oder der Spannbacke erfolgt.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In den Zeichnungen sind bevorzugte Ausführungsbeispiele der Erfindung schematisch dargestellt. Es zeigt
- Fig. 1: eine perspektivische Ansicht einer Ausführungsform der Magnetspannvorrichtung gemäß der Erfindung;
- Fig. 2: eine schematisierte Darstellung der Magnetspannvorrichtung;
- Fig. 3: eine Schnittdarstellung einer bevorzugten Ausführungsform der erfindungsgemäßen Magnetspannvorrichtung;
- Fig. 4: eine Detailansicht eines Betätigungsmechanismus für die in der erfindungsgemäßen Magnetspannvorrichtung vorgesehenen Spannbacke;
- Fig. 5: eine weitere Schnittdarstellung einer bevorzugten Ausführungsform der erfindungsgemäßen Magnetspannvorrichtung;
- Fig. 6: eine weitere Schnittdarstellung einer bevorzugten Ausführungsform der erfindungsgemäßen Magnetspannvorrichtung;
- Fig. 7: eine Detailansicht eines Betätigungsmechanismus für die in der erfindungsgemäßen Magnetspannvorrichtung vorgesehene Spannbacke;
- Fig. 8: eine weitere Detailansicht eines Betätigungsmechanismus wie in Fig. 7 dargestellt;
- Fig. 9a, 9b, 10a, 10b, 11a, 11b: bevorzugte Ausführungsformen eines
- 12a, 12b: in der erfindungsgemäßen Magnetspannvorrichtung realisierbaren Hubantriebes - jeweils in Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

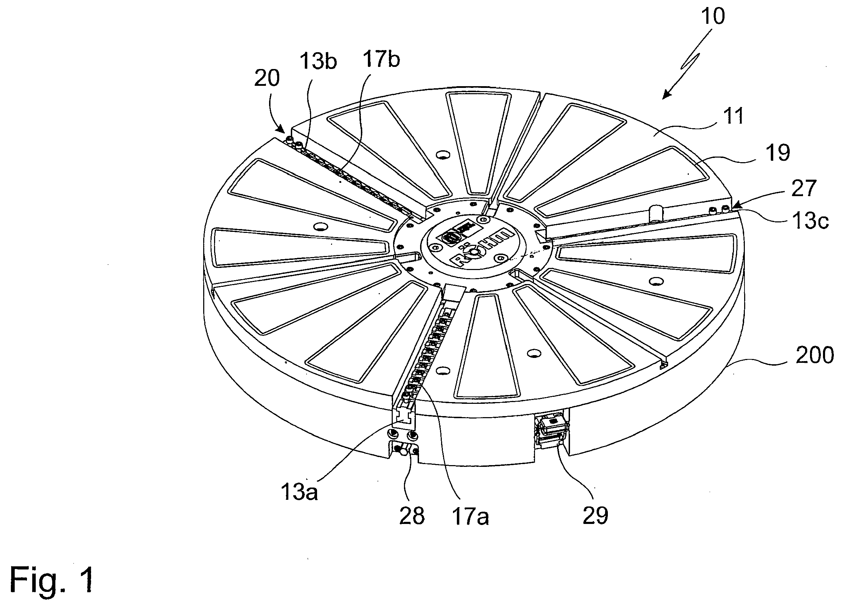

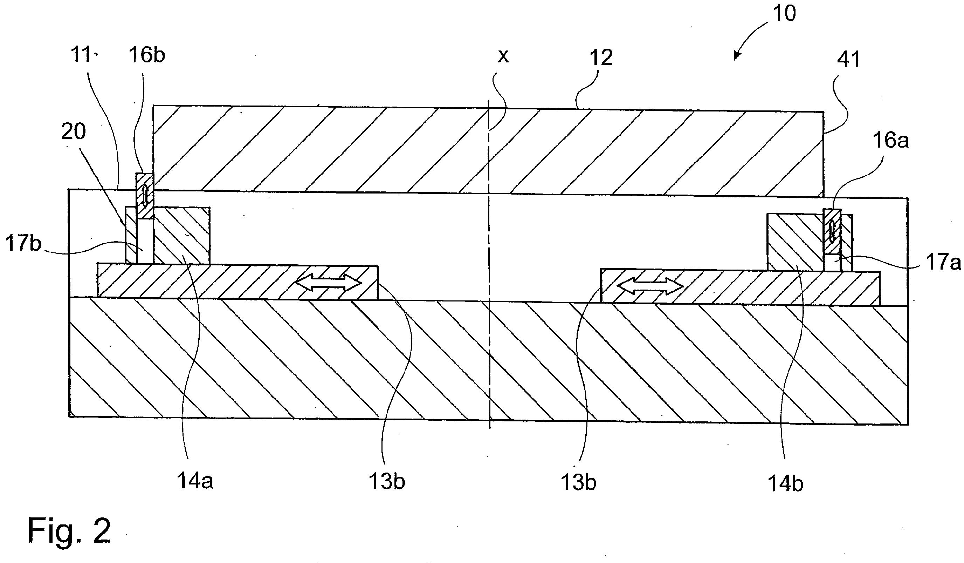

Fig. 1 zeigt in perspektivischer Darstellung eine Ausführungsform einer erfindungsgemäßen Magnetspannvorrichtung 10. Diese weist eine Spannfläche 11 zum Aufspannen eines Werkstückes 12 (vgl. Fig. 2) auf. In der Spannfläche 11 angeordnet sind elektromagnetische Spannmittel 19. Die Spannfläche 11 weist ingesamt drei Führungsnuten 27 auf, in denen Zentriervorrichtungen 20 geführt sind. In den Zentriervorrichtungen 20 erkennbar ist je eine Grundspannbacke 13a,b,c, in der mehrere Aufnahmen 17a,b für die Anordnung von Spannbacken 16a,b (vgl. Fig. 2) vorgesehen sind. Die Spannfläche 11 wird durch die Nuten 27 segmentiert. Durch eine radiale Verschiebung der Grundspannbacken 13a,b,c in der Spannfläche 11 kann ein Zentrieren eines auf der Spannfläche 11 aufgelegten Werkstücks durchgeführt werden. Nach Abschluss des Zentriervorgangs wird die Grundspannbacke 13a,b,c bzw. eine daran angeordnete Spannbacke 16a,b abgesenkt und in eine Position unterhalb der Ebene der Spannfläche 11 gebracht, das heißt, in die Magnetspannvorrichtung 10 bzw. deren Grundkörper 200 eingesenkt. Nach Beaufschlagung der elektromagnetischen Spannmittel 19 wird das Werkstück 12 in der Spannfläche 11 elektromagnetisch gespannt und kann, dadurch dass keine Spannbacken 16a,b vorhanden sind, auch an seiner seitlichen Umfangsfläche 41 bearbeitet werden.

Ein elektromagnetisches Spannen kann gleichzeitig mit dem Absenken der Zentriervorrichtung 20 danach oder davor durchgeführt werden.

Im Ausführungsbeispiel der Fig. 1 ist der Grundspannbacke 13a, b, c ein mechanischer Antrieb zugeordnet. Eine antreibbare Welle 28 ist unterhalb der Grundspannbacke 13a erkennbar. Hierdurch wird eine Radialbewegung der Grundspannbacke 13a,b,c relativ zur Spannfläche 11 möglich. Die Magnetspannvorrichtung 10 weist einen Anschluss 29 auf, über den eine Verbindung mit dem Stromnetz bzw. einer Steuerung erfolgt.

Fig. 2 zeigt eine Magnetspannvorrichtung 10. Diese weist eine Spannfläche 11 auf, die zum Aufspannen eines Werkstückes 12 dient. Die Magnetspannvorrichtung 10 weist ein elektromagnetisches Spannmittel auf, mittels dessen das Werkstück 12 in der Spannfläche 11 gespannt werden kann. Das elektromagnetische Spannmittel kann aus einer Vielzahl radialer Auflageflächen gebildet sein, zwischen denen das mechanische Spannmittel, das heißt, die Grundspannbacke 13a,b mit Aufsatzbacke 14a,b und Spannbacke 16a,b radial verschiebbar angeordnet ist. Hierzu ist ein Antrieb für die Grundspannbacke 13a,b sowie eine geeignete Führung vorgesehen. Die in Fig. 2 dargestellte Magnetspannvorrichtung verfügt zudem über in der Spannfläche 11 verschiebbare Grundspannbacken 13a,b. Diese sind radial in der Spannfläche 11 verschiebbar angeordnet. Die Grundspannbacken 13a,b sind im Ausführungsbeispiel mit jeweils einer Aufsatzbacke 14a,b ausgestattet. Hierbei handelt es sich bevorzugt um mit den Grundspannbacken 13a,b in Eingriff bringbare Blöcke oder dergleichen, die eine Aufnahme für die bewegliche Anordnung der Spannbacken 16a,b zur Verfügung stellen. Durch Verschieben der Spannbacken 16 in eine Position oberhalb der Spannfläche 11, das heißt, so dass die Spannbacke 16a,b die Spannfläche 11 teilweise überragt, erfolgt eine Zentrierung des Werkstückes 12 relativ zur Spannfläche 11. Die Zentriervorrichtung 20 dient dabei dazu, das Werkstück 12 relativ zu einer zentralen Vorrichtungsachse X der Magnetspannvorrichtung 10 zu zentrieren.

Die Grundspannbacken 13a,b und/oder die Spannbacken weisen für ihre jeweilige Verschiebbarkeit einen entsprechenden Antrieb auf. Die Verschiebbarkeit bzw. der Antrieb können dabei pneumatisch, hydraulisch, mechanisch, magnetisch oder elektrisch bzw. elektromotorisch ausgeführt werden. Im Ausführungsbeispiel der Fig. 2 weisen die Aufsatzbacken 14a,b Spannbacken 16a,b auf. Diese sind in in den Aufsatzbacken 14a,b vorgesehenen Aufnahmen 17a,b bewegbar gelagert. Während die Grundspannbacken 13a,b und die damit verbundenen Aufsatzbacken 14a,b radial in der Ebene der Magnetspannvorrichtung 10 bzw. der Spannfläche 11 verschiebbar sind, sind die Spannbacken 16a,b in der Magnetspannvorrichtung 10 bewegbar, das heißt, anheb- bzw. absenkbar. Die Hubbewegung erfolgt dabei im Wesentlichen senkrecht zur radialen Bewegung der Grundspannbacke. Durch axiale Bewegung werden die Spannbacken 16a,b über die Ebene der Spannfläche 11 ausgefahren und durch radiale Bewegung der Zentriervorrichtung 20 an ein zu zentrierendes Werkstück 12 angelegt. Nach Zentrierung werden die Spannbacken 16a,b unter die Spannfläche 11 abgesenkt. Die Magnetspannvorrichtung 10 der Fig. 2 weist mehrere der hier dargestellten Elemente bestehend aus Grundspannbacke 13a,b, Aufsatzbacke 14a,b und Spannbacke 16a,b auf. Bevorzugt wird hier ein zentraler Betätigungsmechanismus zumindest für die Grundspannbacken 13a,b vorgesehen. Selbstverständlich besteht auch die Möglichkeit, dass die Grundspannbacken 13a,b unabhängig voneinander bewegbar sind. Auch die Spannbacken 16a,b sind gemeinsam bzw. unabhängig voneinander bewegbar ausgebildet. Für die Bewegung der Spannbacken 16a,b, insbesondere senkrecht zur Spannfläche 11 kann ein zentraler Antrieb vorgesehen werden. Alternativ besteht die Möglichkeit, hier einen gesonderten Antrieb für jede einzelne Spannbacke 16a,b vorzusehen.

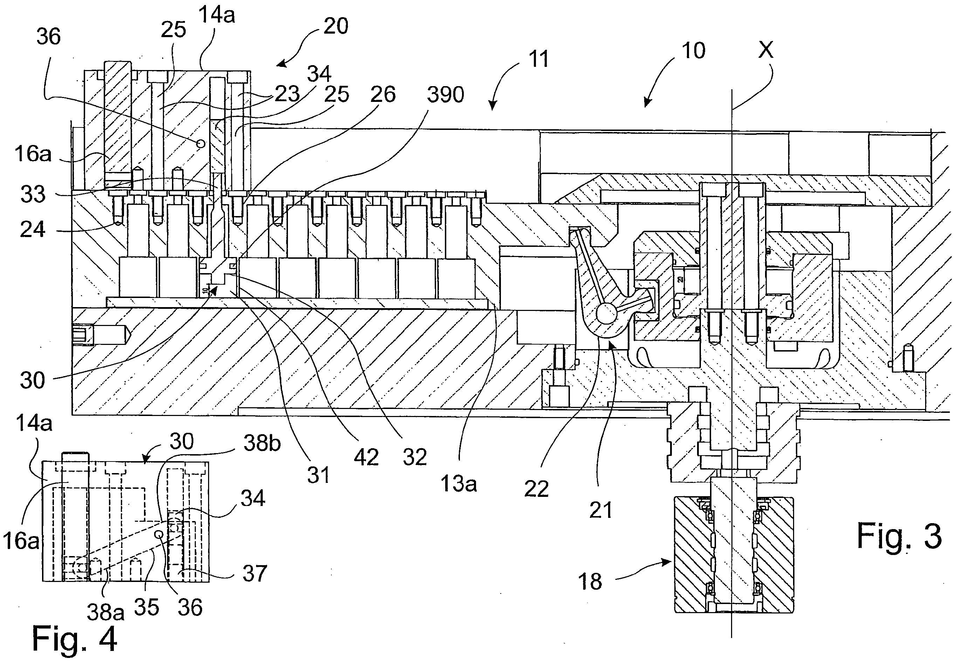

Figur 3 zeigt eine Schnittdarstellung eines Details der erfindungsgemäßen Magnetspannvorrichtung 10. Die hier dargestellte Magnetspannvorrichtung 10 ist in einer Bearbeitungsmaschine vorgesehen, die eine rotatorische Bearbeitung von Werkstücken 12 erlaubt. Hierzu ist eine zentrale Drehachse X vorgesehen, über die der rotatorische Antrieb der Magnetspannvorrichtung 10 und damit des Werkstückes 12 erfolgt. Die hier dargestellte Magnetspannvorrichtung 10 verfügt ebenfalls über eine Spannfläche 11, der ein elektromagnetisches Spannmittel 19 zum Aufspannen eines Werkstückes 12 (nicht dargestellt) in der Spannfläche 11 zugeordnet ist. Besonderes Augenmerk liegt in der Figur 3 auf der Zentriervorrichtung 20. Diese verfügt über mehrere Grundspannbacken 13a, b, von der in Figur 3 lediglich eine der Grundspannbacken, 13a, dargestellt ist. Die Grundspannbacke 13a ist radial verschiebbar in der Magnetspannvorrichtung 10 angeordnet. Für die Bewegbarkeit der Grundspannbacke 13a ist ein Schwenkmechanismus 21 vorgesehen, der eine radiale Bewegung der Grundspannbacke 13a vermittelt. Hierbei wird eine axiale Bewegung in eine radiale Bewegung durch den Betätigungshebel 22 des Schwenkmechanismus 21 umgesetzt und eine radiale Bewegung der Grundspannbacke 13a erreicht. Der Grundspannbacke 13a zugeordnet ist im Ausführungsbeispiel der Figur 3 eine Aufsatzbacke 14a, die die eigentliche Spannbacke 16a aufnimmt. Die Aufsatzbacke 14a weist im Ausführungsbeispiel insgesamt zwei Bohrungen 23 auf, über die eine Festlegung der Aufsatzbacke 14a auf der Grundspannbacke 13a durchgeführt werden kann. Selbstverständlich kann auch eine Rast-, Steck-, Schnapp-, oder Klemmverbindung zwischen den Grundspannbacken 13a,b und der Aufsatzbacke 14a vorgesehen werden. Letzlich ist auch eine einstückige Ausführung von den Grundspannbacken 13a,b und der Aufsatzbacke 14a denkbar und von der Erfindung umfasst. Die Grundspannbacke 13a weist hierzu eine Vielzahl von Sacklochbohrungen 24 auf, in die die in die Bohrungen 23 einsetzbaren Schrauben 25 kraftschlüssig eingreifen. In den Sacklochbohrungen 24 ist hierzu ein entsprechendes Gewinde 26 vorgesehen. Die Sacklochbohrungen 24 sind im Rastermaß in der Grundspannbacke 13 angeordnet und erlauben somit eine wahlweise Anordnung der Aufsatzbacke 14a, relativ zur Grundspannbacke 13a. Hierdurch kann auf unterschiedliche Werkstückgrößen reagiert werden. Beim Einrichten der Magnetspannvorrichtung 10 wird die Aufsatzbacke 14a von der Grundspannbacke 13a getrennt. In der jeweiligen, durch das zu bearbeitende Werkstück 12 definierten, Position angeordnet und über die Schrauben 25 festgelegt.

Die Grundspannbacke 13a nimmt auch den Betätigungsmechanismus 30 für die Spannbacke 16a auf bzw. stellt diesen zur Verfügung. Hierzu sind im Ausführungsbeispiel der Figur 3 in der Grundspannbacke 13a Zylinderbohrung angeordnet, in die jeweils ein Zylinderkolben 32 eingesetzt ist. Durch pneumatische Beaufschlagung der Zylinderbohrung und des Zylinderkolbens 32 wird vermittelt über den Vorspung 33 am Zylinderkolben 32 ein Ausgleichkolben 34 in axialer Richtung der Magnetspannvorrichtung 10 bewegt und vermittelt durch den in Fig. 4 gezeigten Hebel 35 die Spannbacke 16a aus der Aufsatzbacke 14a über die Ebene der Spannflächen ausgefahren. In Fig. 3 erkennbar ist lediglich die Position der Schwenkachse 36 des Hebels 35. Über den Ausgleichkolben 34 und den Hebel 35 wird eine Übersetzung der Hubbewegung des Zylinderkolbens 32 in eine Hubbewegung der Spannbacke 16a übersetzt. Dem Zylinderkolben 32 zugeordnet kann in der Zylinderbohrung zusätzlich eine Feder vorgesehen werden (nicht dargestellt).

Beim Verschieben der Spannbacke 16a in die ausgefahrene Position wird die Feder gespannt. Der Hebel 35 hält die Spannbacke 16a in der Spannposition, dass heißt ausgefahren oberhalb der Aufsatzbacke 14a bzw. der Spannfläche 11. Nach Ende der Beaufschlagung des Zylinderkolbens 32 bewirkt die Federkraft eine Rückführung der Spannbacke 16a in die abgesenkte Position innerhalb der Aufsatzbacke 14a, wie dies in Figur 3 schematisch dargestellt ist. Beim Betätigen der Magnetspannvorrichtung 10 wird folgendermaßen vorgegangen. Zunächst wird ein zu bearbeitendes Werkstück 12 auf der Spannfläche 11 bzw. einer dort zur Verfügung gestellten Auflagefläche aufgesetzt. Durch radiale Verschiebung der Grundspannbacken 13a, b erfolgt eine Vorzentrierung der Magnetspannvorrichtung 10 bzw. der Grundspannbacken 13a, b. Die Spannbacken 16a, b befinden sich hierzu in der ausgefahrenen Position (in Figur 3 nicht dargestellt) und liegen an den äußeren Umfangsflächen 41 des Werkstückes 12 (vergleiche Figur 2) an. Durch radiale Bewegung der Grundspannbacken 13 a, b erfolgt dann die Zentrierung des Werkstückes 12. Hierbei wird eine mechanische Zentrierung durchgeführt. Nach Abschluss der Zentrierung wird das elektromagnetische Spannmittel 19 beaufschlagt und spannt das bevorzugt magnetisierbare Werkstück 12 magnetisch auf der Spannfläche 11 auf. Nach dem Aufspannen wird die Spannbacke 16a, b in die in Figur 3 dargestellte abgesenkte Position verfahren und steht nicht mehr mit den Umfangsflächen 41 des zu bearbeitenden Werkstückes 12 in Eingriff. Zuvor kann eine gegenläufige Radialbewegung durchgeführt werden, um die Spannbacken 16a, b vom Werkstück 12 zu lösen, bevor eine Absenkung erfolgt. Die erreichte Position erlaubt eine ungehinderte Dreiseitenbearbeitung des Werkstückes 12 ohne auf eine bestimmte Größe bzw. Art von Werkzeug beschränkt zu sein. Das Werkstück 12 wird ausschließlich über die elektromagnetischen Spannmittel an der Spannfläche 11 während des Bearbeitungsvorganges gehalten.

Der hier dargestellte Betätigungsmechanismus für die Spannbacke 16a ist pneumatisch ausgeführt. Dargestellt ist im Ausführungsbeispiel der Fig. 3 ein einzelner Zylinderkolben 32. Die übrigen in Fig. 3 in der Grundspannbacke 13a,b vorgesehenen Zylinderbohrung weisen selbstverständlich identische Zylinderkolben 32 auf. Die Zylinderkolben 32 sind über eine Dichtung 390 gegenüber der Wandung 42 der Zylinderbohrung abgedichtet. Der Übersichtlichkeit halber wurden diese in Fig. 3 jedoch nicht dargestellt. Durch die Anordnung der Aufsatzbacke 14a kommt es zum Eingriff des jeweiligen Betätigungsmechanismus' 30 mit der Spannbacke 16. Aufgrund der Vielzahl der in der Grundspannbacke 13 vorgesehenen Betätigungsmechanismen 30 kann flexibel auf die unterschiedlichsten Größen der zu berabeitenden Werkstücke 12 reagiert werden. Den Betätigungsmechanismen 30, das heißt im Ausführungsbeispiel der Fig. 3, den Zylinderkolben 32, ist jeweils eine im Ausführungsbeispiel der Fig. 3 nicht dargestellte Hydraulikfluidleitung zugeordnet. Die für die pneumatische Beaufschlagung der Zylinderkolben 32 notwendige Druckluft wird durch eine Drehdurchführung 18 im Bereich der Drehachse X zugeführt, die Magnetspannvorrichtung 10 ist somit in ein Druckluftsystem einer Bearbeitungsmaschine problemlos integrierbar. Neben der hier dargestellten pneumatischen Betätigung der Zylinderkolben 32 besteht selbstverständlich auch die Möglichkeit, dass die Betätigungsmechanismen 30 hydraulisch betätigbar ausgebildet sind. Anstelle der zuvor genannten Druckluftleitungen wären hier dann Hydraulikleitungen vorzusehen. Alternativen stellen mechanische, magnetische, elektrische oder elektromotorische bzw. elektromagnetische Antriebe dar. Um eine beispielsweise hydraulik- oder pneumatikfreie Vorrichtung zur Verfügung zu stellen kann jedem Betätigungsmechanismen 30 ein eigener (elektro)-mechanischer Antrieb zugeordnet werden. Selbstverständlich besteht auch die Möglichkeit, dass eine Anbindung der Betätigungsmechanismen 30 an einen zentralen Vorrichtungsantrieb vorgesehen wird. Über eine geeignete Steuerung werden dann die Betätigungsmechanismen 30 beaufschlagt. Neben der hier dargestellten Ausgestaltung der Magnetspannvorrichtung 10 mit in axialer Richtung der Magnetspannvorrichtung 10 verschiebbarer Spannbacke 16a besteht selbstverständlich auch die Möglichkeit, dass die Spannbacke 16a verschwenkbar oder ausklappbar in der Aufsatzbacke 14a angeordnet ist. Neben der axialen Bewegbarkeit der Spannbacke 16a kann diese selbstverständlich auch derart angeordnet werden, dass hier eine radiale Verschiebbarkeit der Spannbacke 16 a gegeben ist. Auch hierdurch besteht die Möglichkeit, dass die Spannbacke 16a aus dem Bearbeitungs- bzw. Zugriffsbereichs eines Werkstückes während der Bearbeitung verschoben wird, nachdem eine Zentrierung des Werkstückes 12 durchgeführt wurde.

Fig. 4 zeigt eine Detailansicht einer Aufsatzbacke 14a in geschnittener Darstellung. Erkennbar ist hier der Betätigungsmechanismus 30 für die Spannbacke 16a. Dieser verfügt über einen Hebel 35, der einerseits an der Spannbacke 16a, andererseits an einem in einem Ausgleichsbehälter 37 geführten Ausgleichkolben 34 angelenkt ist. Der Hebel 35 ist verschwenkbar angeordnet und kann um die Schwenkachse 36 bewegt werden. Über das Verhältnis der Länge der Hebelarme 38a,b wird die maximal mögliche Ausfahrhöhe bzw. Absenktiefe der Spannbacke 16a definiert. Durch Beaufschlagung des Betätigungsmechanismus' 30, beispielsweise eines Zylinderkolbens 32 (vgl. Fig. 3) und vermittelt über den daran angeordneten, mit der Spannbacke 16a in Eingriff stehenden Hebels 35 erfolgt ein Ausfahren der Spannbacke 16 aus der Aufsatzbacke 14a und ein Anheben der Spannbacke 16a über die Ebene der Spannfläche 11 für das Werkstück 12. Hierdurch erfolgt eine Vorfestlegung des Werkstückes 12 und die letztliche Zentrierung dann durch radiale Verschiebung der Grundspannbacke 13a,b. Mit der Bewegung der Spannbacke 16a wird, vermittelt über den Hebel 35, der Ausgleichkolben 34 abgesenkt. Dabei wird die für die Rückführung der Spannbacke 16a notwendige Kraft gespeichert. Nach Ende der Druckbeaufschlagung des Pneumatikzylinderkolbens 32 erfolgt die Rückführung der Spannbacke 16a in die Aufsatzbacke 14a und gleichzeitig die Verschwenkung des Hebels 35 und die Bewegung des Ausgleichskolbens 34 in dem entsprechenden Ausgleichsbehälter 37.

Neben den im Zusammenhang mit den Ausführungsformen der Vorrichtung beschriebenen Betätigungsmechanismen 30, beispielsweise einem pneumatischen, hydraulischen, mechanischen, magnetischen oder elektromotorischen Betätigungsmechanismus 30 besteht selbstverständlich auch die Möglichkeit, dass die Bewegung der Spannbacke 16a,b aus der Bewegung der Magnetspannvorrichtung 10 abgeleitet wird.

Die Magnetspannvorrichtung 10, die auch als Hybridspannfutter oder Magnetspannfutter bezeichnet wird, weist in der Regel eine modulare Bauart auf. Das heißt, neben magnetischen Spannmitteln sind mechanische Spannmittel, insbesondere die mechanisch betätigbare Grundspannbacke 13a,b, die dieser zugeordnete bzw. auf dieser angeordnete Aufsatzbacke 14a,b und die in der Aufsatzbacke 14a,b vorgesehene Spannbacke 16a,b vorgesehen und stellen mechanische Spannmodule zur Verfügung. Diese sind zwischen den sich radial in der Magnetspannvorrichtung 10 erstreckenden magnetischen Spannmitteln 19 angeordnet und in hier vorgesehenen Radialnuten oder Führungsnuten 17a, b, c (vgl. Fig. 1) verschiebbar geführt. Nach der eigentlichen Zentrierung des Werkstückes 12 wird, aufgrund der erfindungsgemäßen Ausführung der mechanischen Teile der Magnetspannvorrichtung 10 die eigentliche Spannbacke 16a,b, die am Werkstück 12 während des Zentriervorganges anliegt, unter die Ebene der Spannfläche 11 abgesenkt. Ein Werkzeug, das eine 3-Seitenbearbeitung des Werkstückes 12 durchführt, wird somit durch die Spannbacke 16a,b nicht behindert, die Möglichkeit zur 3-Seitenbearbeitung eines Werkstückes 12 somit ermöglicht und wesentlich verbessert, da nun keine Rücksicht auf den maximal möglichen Durchmesser des Werkzeuges, der in herkömmlichen, aus dem Stand der Technik bekannten Spannvorrichtungen durch den Abstand von Werkstück zu zurückgezogenem, jedoch oberhalb der Ebene der Spannfläche 11 verschiebbaren Spannbacke 16a, b definiert wurde, mehr genommen werden muss.

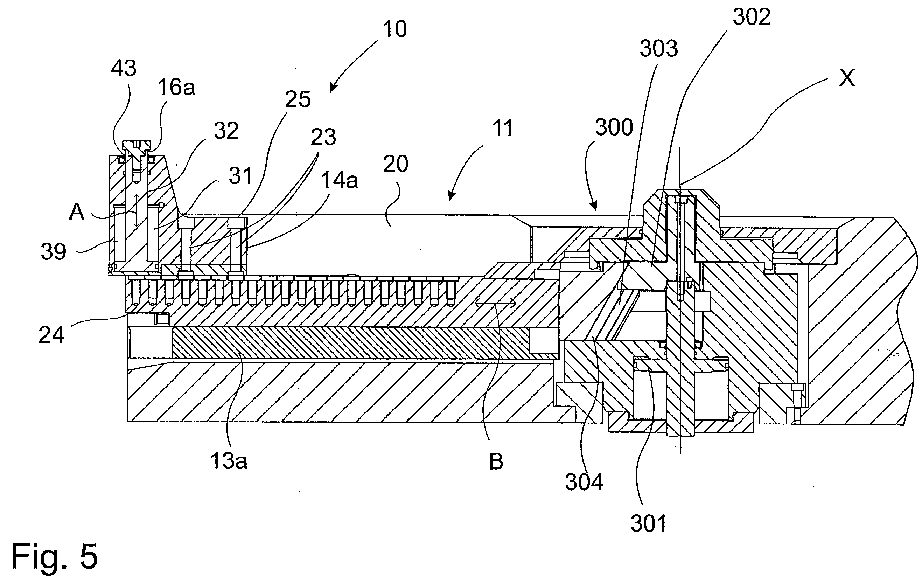

Fig. 5 zeigt eine weitere bevorzugte Ausführungsform der erfindungsgemäßen Magnetspannvorrichtung 10. Die wesentlichen Bestandteile der Magnetspannvorrichtung 10 wurden bereits im Zusammenhang mit der Fig. 3 beschrieben. Der Aufbau der Grundspannbacke 13a entspricht im Wesentlichen dem der Fig. 3. Auch hier sind mehrere Sacklochbohrungen 24 vorgesehen, die dazu dienen, die in die Bohrungen 23 der Aufsatzbacke 14a eingesetzten Schrauben 25 aufzunehmen und eine Verbindung zwischen Aufsatzbacke 14a und Grundspannbacke 13a durchzuführen. Aufgrund der Vielzahl von Sacklochbohrungen 24 in der Grundspannbacke 13a kann eine variable Anordnung der Aufsatzbacke 14 a auf der Grundspannbacke 13a erfolgen. Es kann somit die Zentriervorrichtung 20 in einfacher Art und Weise an die Dimensionen des zu spannenden Werkstückes 12 adaptiert werden. Im Ausführungsbeispiel der Fig. 5 ist die Spannbacke 16a in der Aufsatzbacke 14a angeordnet. Auch der für die Hubbewegung der Spannbacke 16a vorgesehene Hubantrieb 39 ist, anders als in Fig. 3 dargestellt, nicht in der Grundspannbacke 13a, sondern in der Aufsatzbacke 14a angeordnet. Auch hier umfasst der Hubantrieb 39 eine Zylinderbohrung, in der ein Zylinderkolben 32 geführt ist. Dieser Zylinderkolben 32 trägt jedoch an seinem oberen Ende 43 die eigentliche Spannbacke 16a bzw. den Teil der Spannbacke 16a, der mit dem Werkstück in Eingriff gebracht bzw. an diesem angelegt wird und bewirkt so die unmittelbare Anhebung der Spannbacke 16a. Über den Zylinderkolben 32 wird eine relativ zur Magnetspannvorrichtung 10 gesehen axiale Bewegung der Spannbacke 16a realisiert. Die Bewegung der Spannbacke 16a wird durch den Pfeil A angedeutet. Somit liegt hier eine Trennung zwischen Radialbewegung in Pfeilrichtung B und Axialbewegung in Pfeilrichtung A vor.

Um die Radialbewegung der Grundspannbacke 13a durchzuführen, verfügt die in der Fig. 5 dargestellte Magnetspannvorrichtung 10 über einen Antrieb 300. Über diesen kann eine radiale Verschiebung der Grundspannbacke 13a in der Magnetspannvorrichtung 10 erfolgen. Dieser Antrieb 300 umfasst einen Hydraulikzylinder, der axial zur Vorrichtungsachse X der Magnetspannvorrichtung 10 verschoben werden kann. Der Hydraulikzylinder 301 trägt einen im Zuge der Axialbewegung des Hydraulikzylinders 301 ebenfalls axial bewegbaren Nutenstein 302, der in einer an der Grundspannbacke 13a vorgesehenen T- beziehungsweise Keilnut 303 eingesetzt ist. Die T- beziehungsweise Keilnut 303 beschreibt eine Schräge 304. Im Zuge der Axialbewegung des Hydraulikzylinders 301 beziehungsweise des daran vorgesehenen Nutensteins 302 wird die Axialbewegung in eine Radialbewegung der Grundspannbacke 13a umgesetzt, da der Nutenstein 302 in der T- beziehungsweise Keilnut 303 geführt entlang der Schräge 304 bewegt wird. Eine Bewegung der Grundspannbacke 13a in Pfeilrichtung B wird somit durch einfaches axiales Bewegen des Hydraulikzylinders 301 erreicht. Die T- beziehungsweise Keilnut 303 ist in die Schräge eingearbeitet, beispielsweise eingeschnitten, eingeformt oder eingefräst. Selbstverständlich besteht auch die Möglichkeit, dass die Schräge 304 direkt in die Grundspannbacke 13a beziehungsweise deren mit dem Antrieb 300 in Verbindung stehendem Ende eingearbeitet ist.

Im Zuge der Radialbewegung wird die an der Aufsatzbacke 14a angeordnete Spannbacke 16a in den Bereich des Werkstücks 12 gebracht, um dieses dann zu zentrieren. Gleichzeitig oder nach der Radialbewegung erfolgt eine Hubbewegung der Spannbacke 16a,b in deren axialer Richtung. Nach Ende des Zentriervorgangs endet die Beaufschlagung der Spannbacke 16a und diese wird in die Aufsatzbacke 14a zurückgezogen bzw. senkt sich in diese ein. Der Hubantrieb 39 vermittelt dann diese Rückführung der Spannbacke 16a. Nach Abschluss der Zentrierung kommt es zu einer Bestromung der Magnetspannvorrichtung 10 und zum elektromagnetischen Festlegen des Werkstücks 12 auf der Spannfläche 11 bzw. der Magnetspannvorrichtung 10.

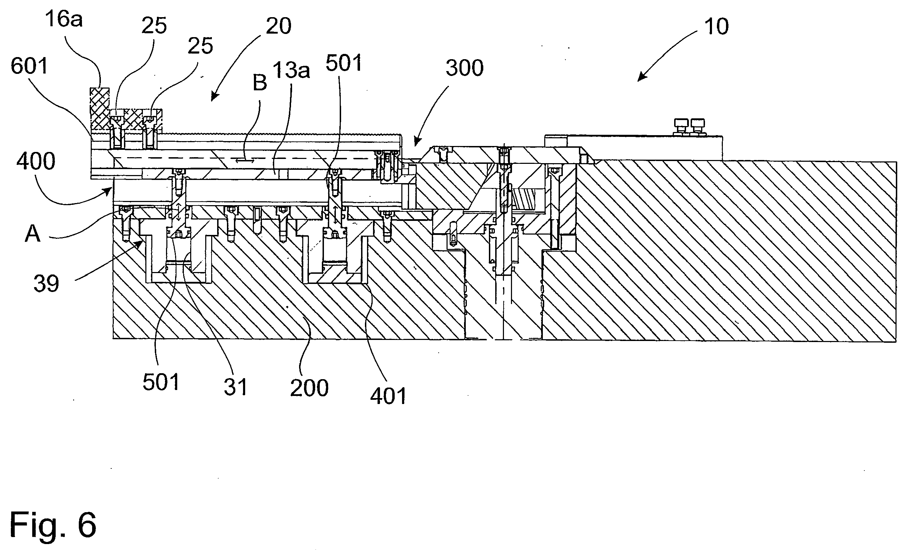

Fig. 6 zeigt eine weitere mögliche Ausführungsform der erfindungsgemäßen Magnetspannvorrichtung 10. Dargestellt ist eine Kombination von Grundspannbacke 13a, damit verbundener Aufsatzbacke 14a und in der Aufsatzbacke 14a festgelegter Spannbacke 16a. Die Spannbacke 16a ist über Schrauben 25 in der Aufsatzbacke 14a befestigt. Ein in der Magnetspannvorrichtung 10 ebenfalls vorgesehener Hubantrieb 39 ist im Grundkörper 200 der Magnetspannvorrichtung 10 angeordnet. Die Aufsatzbacke 14a ist im Ausführungsbeispiel radial in der Grundspannbacke 13a verschiebbar. Hierzu weist die Grundspannbacke 13a eine Führungsnut 601 auf. Diese wird dadurch gebildet, dass eine zusätzliche Leiste 602 auf die Grundspannbacke 13a aufgeschraubt ist, die dann die Führungsnut 601 zur Verfügung stellt. Ein direktes Einsenken beziehungsweise Einschneiden der Führungsnut 601 in die Grundspannbacke ist ebenfalls denkbar.

Über die radiale Bewegung der Aufsatzbacke 14a relativ zur in der Magnetspannvorrichtung 10 anheb- und absenkbaren Grundspannbacke 13a kann eine Zentrierung des Werkstückes 12 vermittelt über die Spannbacke 16a, die selbst nicht bewegbar, das heißt anheb- oder absenkbar ausgebildet ist, durchgeführt werden. Um die Zentriervorrichtung 20 aus dem Eingriffsbereich bzw. der Spannfläche 11 zu bewegen, wird die gesamte Zentriervorrichtung 20 vermittelt über den Hubantrieb 39, der an der Grundspannbacke 13a angreift, angehoben bzw. abgesenkt.

Anheben bzw. Absenken erfolgt durch hydraulische, pneumatische oder sonstige Beaufschlagung des Zylinderkolbens 32, der in einer Zylinderbohrung geführt ist. Der durch Anheben der Zentriervorrichtung 20 freigegebene Zwischenraum 400 entspricht dabei der maximalen Hubhöhe der Spannbacke 16a in eine Position oberhalb der Spannfläche 11. Die Radialbewegung der Aufsatzbacke 14a wird wiederum über einen Antrieb 300 vermittelt, der ebenfalls elektromotorisch, pneumatisch, hydraulisch oder in sonstiger geeigneter Art und Weise ausgebildet sein kann. Die Ausführung entspricht der im Zusammenhang mit Fig. 5 beschriebenen. Es kommt in dem in Fig. 6 gezeigten Ausführungsbeispiel jedoch zu einer Radialbewegung der Aufsatzbacke 14a. Die Grundspannbacke 13a ist lediglich anheb- beziehungsweise absenkbar (Pfeilrichtung A). Die Anordnung des Hubantriebs 39 im Grundkörpers 200 der Magnetspannvorrichtung 10 erfolgt in dort vorgesehenen Ausnehmungen 401. Nach Einsetzen des als Hubstange 501 ausgebildeten Kolben aufweisenden Hubantriebes 39 erfolgt eine Festlegung durch eine Abdeckplatte 402. Mit den vorstehenden Enden 403 der Hubstangen wird dann die Grundspannplatte 13a verschraubt und ist somit absenkbar bzw. anhebbar angeordnet. In der praktischen Ausführung der Magnetspannvorrichtung 10 wie in Fig. 6 dargestellt, wird zunächst ein Anheben der Zentriervorrichtung 20 durchgeführt. Danach wird durch radiale Bewegung der Aufsatzbacke 14a innerhalb der Grundspannbacke 13a ein Anlegen der Spannbacke 16a an die Umfangsfläche 41 des Werkstückes 12 durchgeführt und dieses dadurch zentriert. Nach Abschluss der Zentrierung kann unmittelbar ein Aufspannen des Werkstücks in der Spannfläche 11 der Magnetspannvorrichtung 10 durch Bestromen der Spannmittel 19 bzw. der diesen zugeordneten Elektromagneten erfolgen. Nach Abschluss des Spannvorgangs oder parallel hierzu wird die Zentriervorrichtung 20 abgesenkt und in eine Position unterhalb der Spannfläche 11 bzw. der Ebene der Spannfläche 11 oder in den Grundkörper 200 zurückgeführt.

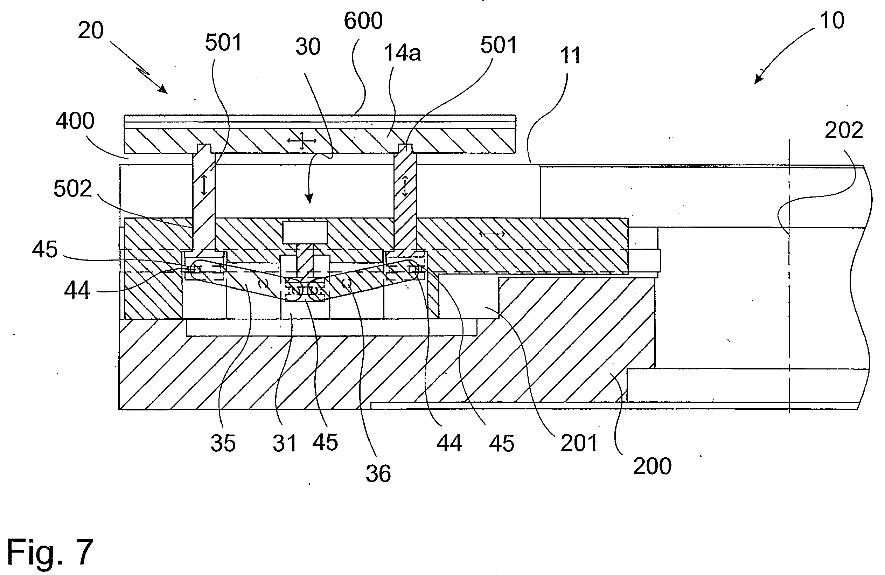

Fig. 7 zeigt eine weitere bevorzugte Ausführungsform der erfindungsgemäßen Magnetspannvorrichtung 10. Anders als im vorhergehend beschriebenen Ausführungsbeispiel ist hier ein Betätigungsmechanismus 30 in der Grundspannbacke 13a vorgesehen. Die Grundspannbacke 13a mit darin angeordnetem Betätigungsmechanismus 30 ist radial beweglich in der Magnetspannvorrichtung 10 angeordnet. Der Betätigungsmechanismus 30 wirkt auf zwei Hubstangen 501, die fest mit einer Aufsatzbacke 14a verbunden sind. Diese Aufsatzbacke 14a trägt die im Ausführungsbeispiel der Fig. 7 nicht dargestellte Spannbacke 16a,b, die fest mit der Aufsatzbacke 14a verschraubt sein kann. Die Oberfläche 600 der Aufsatzbacke 14a stellt hierzu mehrere Anordnungspunkte zur Verfügung (in Fig. 7 nicht dargestellt). Die gesamte Zentriervorrichtung 20 ist als Einheit anzusehen, die in der Magnetspannvorrichtung 10 radial beweglich ist. Zusätzlich zu dieser radialen Bewegung der Zentriervorrichtung 20 kommt eine Hubkomponente, die durch den Betätigungsmechanismus 30 vermittelt wird. Der Betätigungsmechanismus 30 verfügt über eine Zylinderbohrung, in die ein Zylinderkolben 32 des Betätigungsmechanismus' 30 eingesetzt und dort geführt ist. Die beiden Hubstangen 501 sind mit dem Zylinderkolben 32 über einen Hebel 35 verbunden. Durch Absenken des Zylinderkolbens 32 vermitteln die in einem an einer Schwenkachse gelagerten Hebel 35 eine Hubbewegung der Hubstangen 501. Hierdurch wird die Aufsatzbacke 14a und die daran angeordnete Spannbacke 16 aus der Position unterhalb der Spannfläche 11 (nicht dargestellt) angehoben. Durch die nachfolgende radiale Bewegung der gesamten Zentriervorrichtung 20 wird das auf der Spannfläche 11 aufgelegte Werkstück 12 zentriert. In dieser Lage kann das Werkstück 12 dann durch die Spannmittel 19 der Magnetspannvorrichtung 10 elektromagnetisch gespannt werden. Der Zwischenraum 400 definiert auch im Ausführungsbeispiel der Fig. 7a die maximale Hubhöhe der gesamten Zentriervorrichtung 20.

Die Hubstangen 501 weisen an ihren Enden 503 eine senkrecht zur Hubrichtung ausgerichtete Nuten 45 auf, in denen je ein mit dem Zylinderkolben 32 in Eingriff stehender Bolzen 44 geführt ist. Die Absenkbewegung des Zylinderkolbens 32 bewirkt eine Bewegung des Bolzens 44 in der Nut 45, die einhergeht mit einer Bewegung der Hubstangen 501 in axialer Richtung. Die Beaufschlagung des Zylinderkolbens 32 kann hydraulisch oder pneumatisch erfolgen. Die Hubstangen 501 beziehungsweise deren Enden sind in zylindrischen Ausnehmungen aufgenommen beziehungsweise geführt. Die Grundspannbacke 13a vermittelt eine zusätzliche Führung für die Hubstangen 501 über dort vorgesehene Durchbrechungen 502.

Im Grundkörper 200 der Magnetspannvorrichtung 10 ist eine Ausnehmung vorgesehen, in der die Grundspannbacke 13a eingesetzt ist. Diese Ausnehmung 201 erlaubt eine Radialbewegung der Zentriervorrichtung 20 und begrenzt jedoch gleichzeitig deren radiale Verschiebbarkeit sowohl nach außen, das heißt, vom Zentrum 202 der Magnetspannvorrichtung 10 weg bzw. nach Innen, das heißt, auf das Zentrum 202 zu. Vorteil der in Fig. 7 dargestellten Ausführungsform ist es, dass die Zentriervorrichtung 20 insgesamt im Bereich der Spannfläche 11 platzsparend angeordnet werden kann, da der gesamte Betätigungsmechanismus 30, der den Hub der Aufsatzbacke 14a bzw. Spannbacke 16a vermittelt, im Grundkörper 200 der Magnetspannvorrichtung 10 aufgenommen ist.

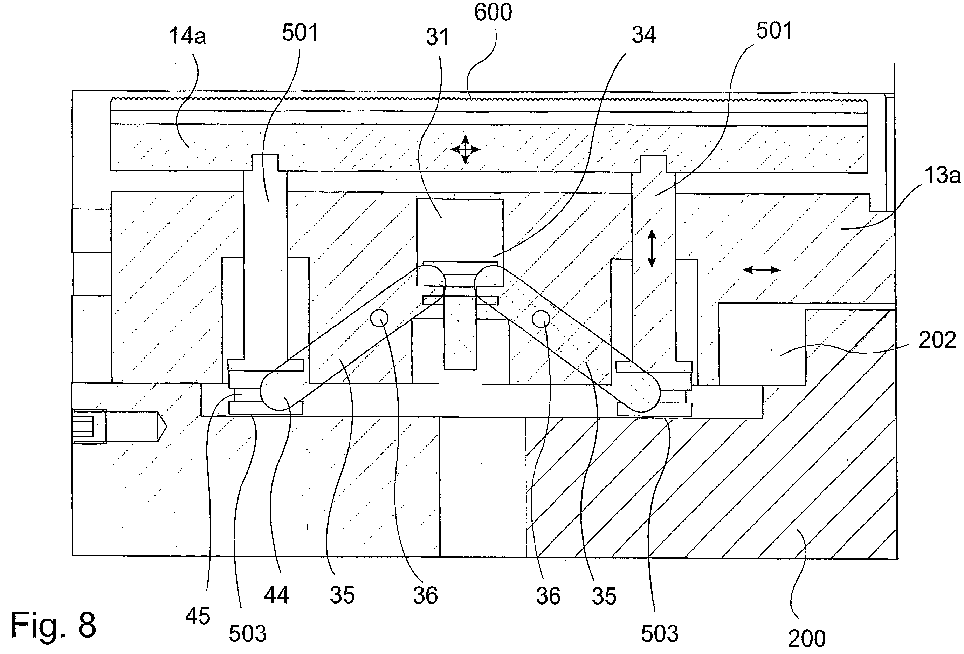

Fig. 8 zeigt den im Zusammenhang mit Fig. 7 beschriebenen Betätigungsmechanismus 30. Hierbei ist die einen Kolbenraum 31 zur Verfügung stellende Zylinderbohrung für den Zylinderkolben 32 in die Grundspannbacke 13a eingesetzt. Unterhalb der Grundspannbacke 13a ist im Ausführungsbeispiel eine Ausnehmung 201 vorgesehen, die einen Ausweichraum für die Enden der Hubstangen 501 der Hubvorrichtung zur Verfügung stellt. Durch Beaufschlagung des Zylinderkolbens 32 kommt es, vermittelt durch die angelenkten Hebel 35 zu einer Hubbewegung der Hubstangen 501. Auch hier weist deren untere Enden 503 eine Nut 45 auf, in der der Hebel 35 bzw. ein an dessen Ende angebrachter Bolzen 44 geführt wird.

Auch die hier gezeigte Zentriervorrichtung 20 ist als eine Einheit ausgebildet. Diese umfasst die den Betätigungsmechanismus 30 beinhaltende Grundspannbacke 13a, die gleichzeitig eine radiale Bewegung der gesamten Zentriervorrichtung 20 vermittelt. Zudem weist die Einheit die Aufsatzbacke 14a auf, die fest mit den Hubelementen, das heißt, den Hubstangen 501 des Betätigungsmechanismus 30 verbunden ist. Auf der Oberfläche 600 der Aufsatzbacke 14a kann die im Ausführungsbeispiel nicht dargestellte Spannbacke 16a angeordnet werden. Die Grundspannbacke 13a erlaubt die radiale Verschiebung der Gesamtvorrichtung, während der Betätigungsmechanismus 30 für den Hub die Anheb- bzw. Absenkbewegung der restlichen beiden Elemente der Zentriervorrichtung 20 bewirkt. Auch in diesem Ausführungsbeispiel wird durch Verlagerung des Hubantriebes 39 bzw. Betätigungsmechanismus 30 in die Grundspannbacke 13a eine platzsparende Ausführungsform zur Verfügung gestellt. Zum Zentrieren wird lediglich die Aufsatzbacke 14a mit daran angeordneter Spannbacke 16a in eine Position oberhalb der Spannfläche 11 angehoben. Der sehr viel Raum in Anspruch nehmende Hubantrieb 39 verbleibt unterhalb der Spannfläche 11 in der Grundspannbacke 13a, die hier auch geführt ist.

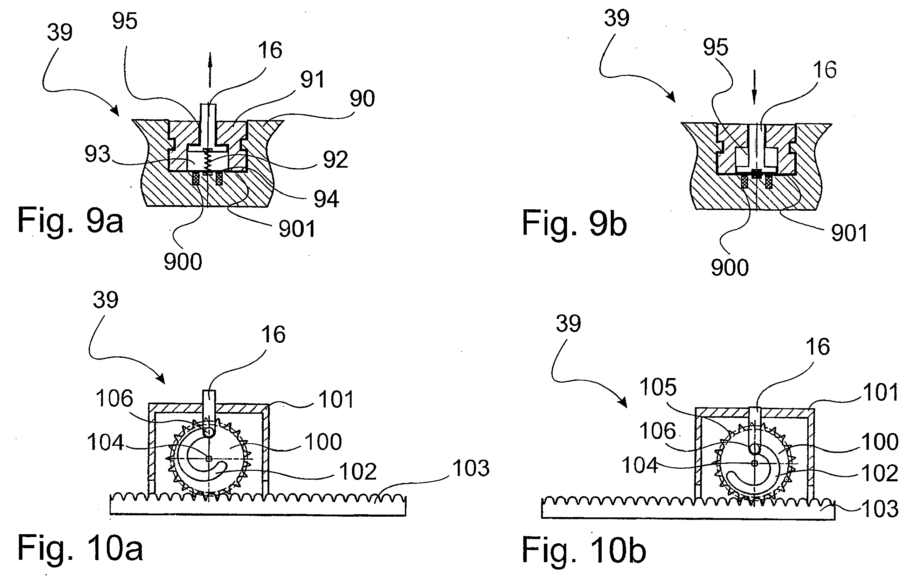

Die Figuren 9a, 9b, 10a, 10b, 11a, 11b und 12a,12b zeigen verschiedene Möglichkeiten, den Hubantrieb 39 zu realisieren. Die hier gezeigten Ausführungsvarianten des Hubantriebs 39 können entweder unmittelbar der Spannbacke 16a,b zugeordnet, das heißt, beispielsweise in der Aufsatzbacke 14a,b oder der Grundspannbacke 13a,b angeordnet werden. Alternativ besteht selbstverständlich auch die Möglichkeit, dass die Hubantriebe 39 dazu dienen, die gesamte Zentriervorrichtung 20 anzuheben bzw. abzusenken, um so eine Verschiebung bzw. Bewegung der Spannbacke 16a,b in eine Position oberhalb der Spannfläche 11 bzw. unterhalb der Spannfläche 11 bzw.deren Ebene anzuheben bzw. abzusenken.

Figuren 9a und 9b stellen die Ausführungsform eines Hubantrieb 39 als Elektromagnet 91 dar. Der Elektromagnet 91 ist mit einem Anker 95 ausgebildet, der in einem Ankerraum 93 bewegbar ist. Durch Beaufschlagung des Elektromagneten 91, der hier nur teilweise dargestellt ist, kommt es zur Bewegung des Ankers 95 im Ankerraum 93. Am Anker 95 zugeordnet ist im Ausführungsbeispiel die Spannbacke 16. Aufgrund der Ankerbewegung kann ein Anheben bzw. Absenken der Spannbacke 16 durchgeführt werden. Zugeordnet ist dem Anker 95 eine Rückstellfeder 92. Diese wird bei Bestromung des Elektromagneten 91 und Anziehen des Ankers 95 gespannt und bewirkt im unbestromten Zustand und beim Abfallen des Ankers 95 vom Elektromagneten 91 ein Rückziehen des Ankers 95 im Ankerraum 93, so dass gleichzeitig mit der Bewegung des Ankers 95 ein Absenken der Spannbacke 16 erfolgt. Der unbestromte Zustand ist in Fig. 9b dargestellt. Gleichzeitig besteht selbstverständlich auch die Möglichkeit, dass eine Kopplung mit den Spannmitteln 19 der Magnetspannvorrichtung 10 erfolgt. In diesem Fall wäre in Fig. 9a der angehobene, das heißt, unbestromte Zustand der Magnetspannvorrichtung 10 dargestellt. Vermittelt durch die Rückstellfeder 92 wird in diesem unbestromten Zustand die Spannbacke 16 in ihrer Position oberhalb der Spannfläche gedrückt bzw. verschoben. Es kann dann, beispielsweise durch radiale Bewegung der Grundspannbacke 13a,b, der Aufsatzbacke 14a,b oder der Spannbacke 16a,b selbst zu einer Zentrierung des Werkstücks 12 kommen. Im Zuge der Bestromung der Magnetspannvorrichtung 10 zum Spannen des Werkstücks 12 wird dann der Anker 95 mit daran angeordneter Spannbacke 16 angezogen und die Spannbacke 16 so in eine Position unterhalb der Spannfläche 11 zurückgeführt. Beide Varianten sind von der Erfindung umfasst. Die Integration in die Magnetspannvorrichtung 10 macht einen gesonderten Elektromagneten, der nur für die Betätigung der Spannbacke 16 zuständig ist, überflüssig und kann somit die Baumaße der gesamten Zentriervorrichtung 20 wesentlich verringern.

Eine sich ähnlich darstellende Ausführungsform, wie die in den Fig. 9a, b gezeigte, sieht vor, dass anstelle eines die Spannbacke 16 aufnehmenden Elektromagneten 91 lediglich am Boden 901 der Ausnehmung, in die eine Aufnahmevorrichtung für die bewegbare Spannbacke 16 eingesetzt ist, ein Magnetenpaar 900 eingesetzt ist. Bei elektrischer Beaufschlagung dieses Magnetenpaars 900 wird der die Spannbacke 16 tragende Anker 95 an das Magnetenpaar 900 angezogen und komprimiert dabei die Feder 92. Bei Ende der Beaufschlagung fällt der Anker mit daran angeordneter Spannbacke 16 von den Magnetenpaaren 900 ab und wird durch die Feder 92 in seine ausgefahrene beziehungsweise angehobene Position verbracht. In dieser kann dann eine Zentrierung des Werkstückes 12 vorgenommen werden.

Fig. 10a,b zeigen eine weitere alternative Ausführungsform eines Hubantriebes 39. Dieser weist eine eine Zwangsführung der Spannbacke 16 vermittelnde Scheibe 100 auf. In der Scheibe 100 vorgesehen ist eine, das Scheibenzentrum 104 spiralförmig umgebende Führungskulisse 102. In dieser Führungskulisse 102 ist ein am Ende der Spannbacke 16 angeordneter Stift 106 geführt. Die Führungskulisse 102 geht in ihrem weiteren Verlauf in einen Bereich mit konstantem Radius über, wodurch ein Freilauf für die Spannbacke 16 zur Verfügung gestellt wird. Die Spannbacke 16 wird dann im ausgefahrenen Zustand gegen das Werkstück 12 verfahren. Die Ausgestaltung der Führungskulisse 102 stellt sicher, dass nur im vollständig angehobenen Zustand der Spannbacke 16 eine Kontaktierung des Werkstückes 12 erfolgt.

Durch Drehung der Scheibe 100 wird die Spannbacke 16 aufgrund der spiralförmigen Ausführung der Führungskulisse 102 eingezogen, bzw. bei gegenläufiger Bewegung ausgefahren. Dabei wird die Spannbacke 16 in eine Position oberhalb bzw. unterhalb der Spannfläche 11 verbracht, je nach dem welche Funktionalität gewünscht ist. Die Bewegung der Scheibe 100 wird vermittelt durch eine Zahnstange 103, die während einer radialen Bewegung der Grundspannbacke 13a,b bzw. der gesamten Zentriervorrichtung 20 an der Scheibe 100, die die zu der Radialbewegung senkrecht ausgerichtete Bewegung der Spannbacke 16 durchführt, angreift.

Die an der Scheibe 100 vorgesehenen Zähne 105 kämmen mit der Zahnstange 103, so dass eine radiale Bewegung der Zahnstange 103 bzw. der diese zum Beispiel tragenden Grundspannbacke 13 in eine zu der Radialbewegung senkrecht ausgerichtete (Hub)Bewegung der Spannbacke 16 umgesetzt wird. Die Scheibe 100 ist im Ausführungsbeispiel in einem Gehäuse 101 angeordnet. Im Gehäuse 101 bzw. einer Gehäusewand aufgenommen befindet sich die Achse, um die die Scheibe 100 drehbar angeordnet ist.

Fig. 10b zeigt den abgesenkten Zustand der Spannbacke 16 aus Fig. 10a.

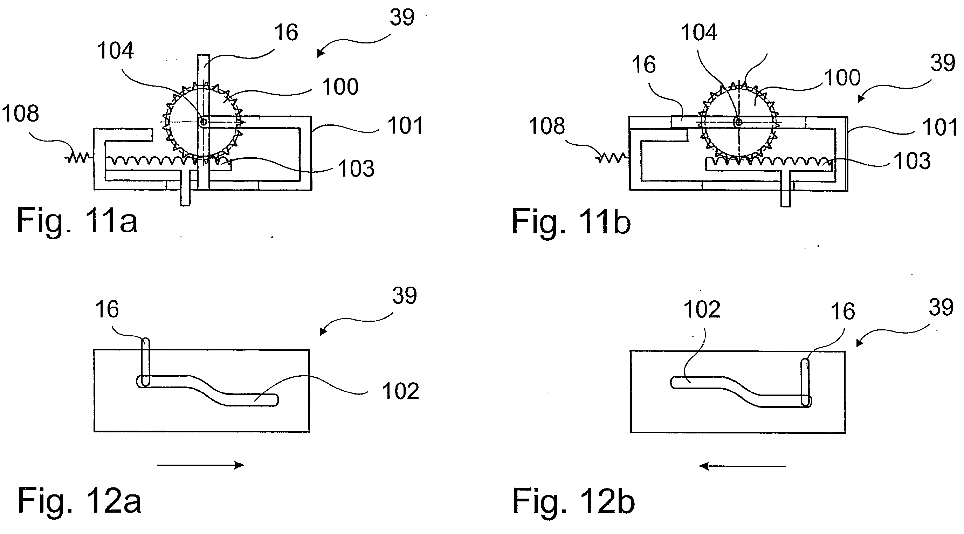

Fig. 11a zeigt eine weitere bevorzugte Ausführungsform des Hubantriebes 39. Auch dieser verfügt über eine Scheibe 100, die nach Art einer Zahnscheibe ausgebildet ist und mit einer Zahnstange 103 kämmt. Im Scheibenzentrum 104 zusätzlich mit angelenkt ist die Spannbacke 16. Bei einer Radialbewegung der Zahnstange 103, das heißt, im hier dargestellten Ausführungsbeispiel durch horizontale Bewegung der Zahnstange 103 kommt es zur Drehung der Scheibe 100 und zum Verschwenken der daran angeordneten Spannbacke 16. Im Zuge dieser Verschwenkung wird die Spannbacke 16 von einer abgesenkten Position unterhalb oder in einer Spannfläche 11 bzw. in einem Grundkörper der Magnetspannvorrichtung 10 in die angehobene Position oberhalb der Spannfläche 11 bzw. diese überragend verbracht und kann dort zum Zentrieren verwendet werden.

Auch hier erreicht die Spannbacke 16 von dem Kontakt mit dem zu zentrierenden Werkstück 12 die vollständig angehobene beziehungsweise verschwenkte Position. Durch weitere Radialbewegung wird dann das Werkstück 12 angefahren. Dabei wird die Prallfeder 108 komprimiert und verhindert ein zu hartes Auftreffen der Spannbacke 16 auf das Werkstück 12. Im weiteren Verlauf der Radialbewegung nimmt der Eingriffsvorsprung 107 das Gehäuse 101 mit bis die Spannbacke 16 vollständig senkrecht ausgerichtet ist. Gegen die Kraft der Prallfeder 108 erfolgt dann das Anstellen von Gehäuse 101 und Spannbacke 16 gegen das Werkstück 12. Das Gehäuse 101 ist, wie auch in Fig. 10a und b, dabei Teil der Zentriervorrichtung 12 beziehungsweise der Grundspannbacke 13 oder der Aufsatzbacke 14.

Der in den Fig. 11a und 11b in zwei Positionen dargestellte Hubantrieb 39 setzt ebenfalls eine radiale Bewegung, beispielsweise einer unterhalb des Gehäuses 101 geführten Grundspannbacke 13 oder dergleichen in eine Verschwenkbewegung der Spannbacke 16 um. Der Zahnstange 103 zugeordnet ist ein Eingriffsvorsprung 107, der mit einem radial beweglichen Element der Zentriervorrichtung 20 bzw. der Magnetspannvorrichtung 10 in Eingriff steht und im Zuge dieser Radialbewegung eine Verschiebung der Zahnstange 103 bewirkt, wodurch ein Verschwenken der Spannbacke 16 erfolgt.

Eine weitere Ausführungsform des Hubantriebs 39 zeigen die Fig. 12a und 12b. Hierbei ist die Spannbacke 16 in einer Führungskulisse 102 geführt. Bei Radialbewegung der Führungskulisse 102 bzw. des diese tragenden Elementes der Zentriervorrichtung 20 bzw. Magnetspannvorrichtung 10, das heißt, zum Beispiel der Grundspannbacken 13 oder der Aufsatzbacke 14 wird die Spannbacke 16 angehoben bzw. abgesenkt und dabei in eine Position oberhalb, unterhalb einer Spannfläche 11 bzw. eine gegenüber der Spannfläche 11 abgesenkte oder angehobene Position gebracht. Das Anheben bzw. Absenken erfolgt dabei quer bzw. senkrecht zur Bewegungsrichtung der Führungskulisse 102. Zusätzlich kann hier auch eine weitere Führung für die Spannbacke 16 vorgesehen werden, die in den Fig. 12a und 12b der Übersichtlichkeit halber jedoch nicht gezeigt ist.

Sämtliche hier gezeigten Hubantriebe 39 wurden im Zusammenhang mit der Spannbacke 16 beschrieben. Selbstverständlich besteht auch die Möglichkeit, dass ein entsprechender Hubantrieb 39 der Zentriervorrichtung 20, der Grundspannbacke 13 bzw. der Aufsatzbacke 14 zugeordnet ist, um deren Anheben bzw. Absenken durchzuführen. Die Erfindung umfasst sämtliche Anordnungsvarianten der Hubantriebe 39 gleichermaßen und bleibt nicht auf die beschriebene Anwendung der Hubantriebe 39 wie in den Ausführungsbeispielen mit der Spannbacke 16 gezeigt beschränkt.

Allen Antrieben und Ausführungsformen der hier gezeigten Magnetspannvorrichtung 10 bzw. Detailansichten hieraus gemein ist, dass eine radiale Bewegung beispielsweise der Grundspannbacke 13 oder der Zentriervorrichtung 20 in eine hierzu senkrecht ausgerichtete Bewegung eines weiteren Elements der Zentriervorrichtung 20 umgesetzt wird. Somit wird der der Erfindung zugrunde liegende Gedanke durch die gezeigten Vorrichtungen verwirklicht. Die Spannbacke 16 bzw. ein diese tragendes Element einer Zentriervorrichtung 20 wird nur zum Zentrieren in eine Zentrierposition angehoben bzw. gebracht und nach Abschluss der Zentrierung wieder in eine Position unterhalb der Spannfläche 11 zurückgezogen, so dass eine mehrseitige Bearbeitung des Werkstückes 12 ohne störende Spannvorrichtungen 16 der Zentriervorrichtung 20 durchgeführt werden kann. Bekannte Magnetspannvorrichtungen 10 werden somit weitergebildet und durch die erfindungsgemäße Ausgestaltung wesentlich verbessert.

## Patentansprüche

1. Magnetspannvorrichtung mit einer Spannfläche (11), wenigstens einem elektromagnetischen Spannmittel (19) zum Aufspannen eines Werkstückes (12) in der Spannfläche (11) und einer Zentriervorrichtung (20) zum Zentrieren des Werkstückes (12), wobei die Zentriervorrichtung (20) wenigstens eine in der Spannfläche (11)verschiebbare Grundspannbacke (13a,b) aufweist, **dadurch gekennzeichnet, dass** der wenigstens einen Grundspannbacke (13a,b) eine bezüglich der Spannfläche (11) in eine abgesenkte oder angehobene Position bewegbare Spannbacke (16a,b) zugeordnet ist.

2. Magnetspannvorrichtung nach Anspruch 1, **dadurch gekennzeichnet, dass** zwischen der Grundspannbacke (13a,b) und der Spannbacke (16a,b) eine Aufsatzbacke (14a,b) angeordnet ist und/oder dass die Spannbacke (16a,b) pneumatisch, hydraulisch, mechanisch, magnetisch, insbesondere elektromagnetisch, elektromotorisch oder manuell bewegbar ausgebildet ist und/oder dass die Spannbacke einen gesonderten Antrieb, insbesondere einen pneumatischen, hydraulischen, mechanischen, magnetischen, insbesondere elektromagnetischen, elektromotorischen oder manuellen Hubantrieb aufweist.

3. Magnetspannvorrichtung nach einem der vorhergehenden Ansprüche, **dadurch gekennzeichnet, dass** die Bewegung der Spannbacke (16a,b) aus einem der Magnetspannvorrichtung (10) zugeordneten, eine radiale Bewegung der Grundspannbacke (13a,b) oder Aufsatzbacke (14a,b) vermittelnden Antrieb ableitbar ist und/oder dass die Grundspannbacke (13a,b), die Aufsatzbacke (14a,b) und/oder die Spannbacke (16a,b) radial beweglich in und/oder unterhalb der Spannfläche (11) angeordnet ist/sind und/oder dass die Aufsatzbacke (14a,b) und/oder die Spannbacke (16a,b) oder eine aus Aufsatzbacke (14a,b) und Spannbacke (16a,b) gebildete Einheit lösbar fest in der Grundspannbacke (13a,b) und/ oder der Aufsatzbacke (14a,b) angeordnet ist/sind.

4. Magnetspannvorrichtung nach einem der vorhergehenden Ansprüche, **dadurch gekennzeichnet, dass** der der Spannbacke (16a,b) zugeordnete Antrieb oder eine Betätigungsmechanismus (30) in der Grundspannbacke (13a,b) und/oder der Aufsatzbacke (14a,b) angeordnet ist.

5. Magnetspannvorrichtung nach einem der vorhergehenden Ansprüche, **dadurch gekennzeichnet, dass** die Zentriervorrichtung (20) aus Grundspannbacke (13a,b), Aufsatzbacke (14a,b) und/oder Spannbacke (16a,b) gebildet ist und/oder **gekennzeichnet durch** einen der Zentriervorrichtung (20) zugeordneten Hubantrieb (39) zum Anheben bzw. Absenken der Zentriervorrichtung (20).

6. Magnetspannvorrichtung nach einem der vorhergehenden Ansprüche, **dadurch gekennzeichnet, dass** die Zentriervorrichtung (20) radial beweglich in oder unterhalb der Spannfläche (11) angeordnet ist, insbesondere wobei die Spannbacke (16a,b) in eine Position in oder oberhalb der Ebene der Spannfläche (11) anhebbar ist und/oder **gekennzeichnet durch** einen der Grundspannbacke (13a,b) zugeordneten Hubantrieb (39) zum Anheben bzw. Absenken der Grundspannbacke (13a,b) und/oder **gekennzeichnet durch** einen der Aufsatzbacke (14a,b) zugeordneten Hubantrieb.

7. Magnetspannvorrichtung nach einem der vorhergehenden Ansprüche, **dadurch gekennzeichnet, dass** die die Spannbacke (16a,b) tragende Aufsatzbacke (14a,b) radial in der Spannfläche (11) bewegbar ist.

8. Magnetspannvorrichtung nach einem der vorhergehenden Ansprüche, **dadurch gekennzeichnet, dass** die Grundspannbacke (13a,b) und/oder die Aufsatzbacke (14a,b) wenigstens eine Aufnahme (17a,b) für die Spannbacke (16a,b) aufweist und/oder dass die Grundspannbacke (13a,b) und/oder die Aufsatzbacke (14a,b) wenigstens zwei Aufnahmen (17a,b) für die Spannbacke (16a,b) aufweist/aufweisen, wobei die Aufnahmen (17a,b) über die radiale Länge der Grundspannbacke (13a,b) und/oder der Aufsatzbacke (14a,b) insbesondere gleichmäßig beabstandet vorgesehen sind und/oder dass in oder bei jeder Aufnahme (17a,b) ein Hubantrieb (39) für die Spannbacke (16a,b) vorgesehen ist und/oder dass die Spannbacke (16a,b) in der Aufnahme (17a,b) lösbar fest anbringbar, insbesondere einsetzbar, einklemmbar, einschraubbar oder einsteckbar ausgebildet ist.

9. Magnetspannvorrichtung nach einem der vorhergehenden Ansprüche, **dadurch gekennzeichnet, dass** die Spannbacke (16a,b) einen Betätigungsmechanismus (30) aufweist, wobei der Betätigungsmechanismus (30) wenigstens ein manuell oder motorisch betätigbares Hubelement aufweist und ein mit dem Hubelement verbundenes, eine Bewegung das Hubelementes in eine gegenläufige Hubbewegung der Spannbacke (16a,b) umsetzendes Führungselement vorgesehen ist und/oder dass die Spannbacke (16a,b) einen Betätigungsmechanismus (30) aufweist, wobei der Betätigungsmechanismus (30) mit einem pneumatisch oder hydraulisch beaufschlagbaren, insbesondere in einem Kolbenraum (31) geführten Kolbenelement ausgebildet ist und ein mit dem Kolbenelement verbundenes und eine Bewegung das Kolbenelementes in eine gegenläufige Hubbewegung der Spannbacke (16a,b) umsetzendes Führungselement vorgesehen ist.

10. Magnetspannvorrichtung nach einem der vorhergehenden Ansprüche, **dadurch gekennzeichnet, dass** der Hubantrieb eine eine Zwangsführung der Spannbacke (16a,b) vermittelnde Scheibe (100) aufweist, wobei die Spannbacke (16a,b) exzentrisch an der Scheibe (100) angelenkt ist oder eine spiralförmig das Scheibenzentrum (104) umgebende Führungskulisse (102) für die Spannbacke (16a,b) vorgesehen ist und/oder dass die Führungskulisse (102) in eine Führungsbahn mit konstantem Radius übergeht beziehungsweise eine Führungsbahn mit konstantem Radius aufweist und/oder dass die Scheibe (100) über eine Zugstange antreibbar ist, insbesondere wobei die Zugstange auf der bevorzugt radial verschiebbaren Grundspannbacke (13a,b) und/oder Aufsatzbacke (14a,b) angeordnet oder mit dieser verbunden beziehungsweise in Eingriff bringbar ist und/oder dass die Scheibe (100) als Zahnscheibe ausgebildet ist und die Zugstange als mit der Zahnscheibe in Eingriff stehende Zahnstange (103) vorgesehen ist und/oder dass die Spannbacke (16a,b) im Scheibenzentrum (104) befestigt ist und eine Umsetzung einer Drehbewegung der Scheibe (100) in eine Schwenkbewegung der Spannbacke (16a,b) vorgesehen ist.

11. Magnetspannvorrichtung nach einem der vorhergehenden Ansprüche, **dadurch gekennzeichnet, dass** eine radiale Bewegung der Grundspannbacke (13a,b) und/oder der Aufsatzbacke (14a,b) relativ zur Spannfläche (11) in eine senkrecht zur radialen Bewegung gesehen ausgerichteten Hubbewegung der Spannbacke (16a,b) relativ zur Spannfläche (11), insbesondere eine Hubbewegung von einer angehobenen in eine abgesenkte Position der Spannbacke (16a,b) oder umgekehrt, umsetzbar ist.

12. Magnetspannvorrichtung nach einem der vorhergehenden Ansprüche **gekennzeichnet durch** einen Elektromagneten (91) mit einem bei Bestromung des Elektromagneten (91) in einem Ankerraum (93) beweglichen Anker (95), wobei der Anker (95) als Spannbacke (16a,b) ausgebildet ist oder die Spannbacke (16a,b) trägt und/oder dass dem Anker (95) eine Rückstellfeder (92) zugeordnet ist und der Anker (95) bei Bestromung des Elektromagneten (91) entgegen der Kraftrichtung der Rückstellfeder (92) im Ankerraum (93) bewegbar ist und/oder dass der Hubantrieb (39) einen gesonderten Elektromagneten (91) aufweist und/oder dass eine Kopplung des Hubantriebes (39) der Spannbacke (16a,b) mit einem elektromagnetischen Spannmittel der Magnetspannvorrichtung (10) vorgesehen ist, insbesondere wobei mit einer Aktivierung der Magnetspannvorrichtung (10) die Spannbacke (16a, b) in eine Position in oder unterhalb der Spannfläche (11) absenkbar ist.

13. Verfahren zum Zentrieren eines Werkstückes (12) in der Spannfläche (11) einer Magnetspannvorrichtung (10), insbesondere einer Magnetspannvorrichtung (10) gemäß einem der vorhergehenden Ansprüche, umfassend die Schritte:
(i) Auflegen des Werkstückes (12) auf einer Spannfläche (11),
(ii) Zentrieren des Werkstückes (12) in der Spannfläche (11) durch Verschieben der Spannbacke (16a, b) auf das Werkstück (12) bzw. einen Rand des Werkstückes (12) zu
(iii) Elektromagnetisches Spannen des Werkstückes (12), **gekennzeichnet durch**
(iv) Absenken der Spannbacke (16a,b) in eine Position in oder unterhalb der Ebene der Spannfläche (11).

14. Verfahren nach Anspruch 13, **dadurch gekennzeichnet, dass** der Schritt (iv) vor Schritt (iii) durchgeführt wird und/oder dass vor Schritt (iii) oder (iv) ein Entspannen der Spannbacke (16a, b) und/oder ein Entfernen der Spannbacke (16a, b) vom Werkstück (12) vorgesehen ist und/oder dass vor Schritt (ii) ein Anheben der Spannbacke (16a,b) aus einer Position in oder unterhalb der Ebene der Spannfläche (11) in eine Position auf oder oberhalb der Spannfläche (11) vorgesehen ist und/oder dass das Zentrieren durch radiale Verschiebung der Spannbacke (16a,b) und/oder einer die Spannbacke (16a,b) tragenden Grund spannbacke (13a,b) oder Aufsatzbacke (14a,b) erfolgt und/oder dass eine Bewegung der Spannbacke (16a,b) durch einen gesonderten Antrieb erfolgt und/oder dass eine radiale Bewegung der Grundspannbacke (13a,b) und/oder der Aufsatzbacke (14a,b) relativ zur Spannfläche (11) in eine relativ zur Spannfläche (11) gesehen anhebende oder absenkende Bewegung der Spannbacke (16a,b) umgesetzt wird.

15. Verfahren nach einem der Ansprüche 13 oder 14, **dadurch gekennzeichnet, dass** eine Bewegung der Spannbacke (16a,b) aus der Bewegung der Grundspannbacke (13a,b) und/oder der Aufsatzbacke (14a,b) abgeleitet wird und/oder dass eine pneumatisch, hydraulisch, mechanisch, magnetisch, insbesondere elektromagnetisch, elektromotorisch oder manuell vermittelte Hubbewegung und/oder Radialbewegung der Grundspannbacke (13a,b), der Aufsatzbacke (14a,b) und/oder der Spannbacke (16a,b) erfolgt.

## Claims

1. Magnetic clamping device with a clamping surface (11), at least one electro-magnetic clamping means (19) for clamping a work piece (12) in the clamping surface (11), and a centering device (20) for centering the work piece (12), wherein the centering device (20) has at least one basic clamping jaw (13a,b) moving in the clamping surface (11), **characterized in that** a clamping jaw (16a,b) that can be moved into a lowered or lifted position relatively to the clamping surface (11) is assigned with the at least one basic clamping jaw (13a,b).

2. Magnetic clamping device according to claim 1, **characterized in that** between the basic clamping jaw (13a,b) and the clamping jaw (16a,b) a top jaw (14a,b) is arranged, and/or the clamping jaw (16a,b) is designed moving pneumatically, hydraulically, mechanically, magnetically, in particular electro-magnetically, electro-motively or manually, and/or the clamping jaw has a separate drive, in particular a pneumatic, hydraulic, mechanic, magnetic, in particular electro-magnetic, electro-motive or manual lift drive.

3. Magnetic clamping device according to one of the preceding claims, **characterized in that** the movement of the clamping jaw (16a,b) can be derived a from drive assigned with the magnetic clamping device (10), arranging a radial movement of the basic clamping device (13a,b) or top jaw (14a,b), and/or the basic clamping jaw (13a,b), the top jaw (14a,b), and/or the clamping jaw (16a,b) is/are arranged radially moving in and/or below the clamping surface (11), and/or the top jaw (14a,b) and/or the clamping jaw (16a,b) or a unit formed by top jaw (14a,b) and clamping jaw (16a,b) is/are arranged releasably fixedly in the basic clamping jaw (13a,b) and/or the top jaw (14a,b).

4. Magnetic clamping device according to one of the preceding claims, **characterized in that** the drive assigned with the clamping jaw (16a,b) or an actuating mechanism (30) is arranged in the basic clamping jaw (13a,b) and/or the top jaw (14a,b).

5. Magnetic clamping device according to one of the preceding claims, **characterized in that** the centering device (20) is formed by basic clamping jaw (13a,b), top jaw (14a,b), and/or clamping jaw (16a,b), and/or **characterized by** a lift drive (39) assigned with the centering device (20) for lifting and lowering, respectively, the centering device (20).

6. Magnetic clamping device according to one of the preceding claims, **characterized in that** the centering device (20) is arranged radially moving in or below the clamping surface (11), wherein in particular the clamping jaw (16a,b) can be lifted in a position in or above the plane of the clamping surface (11), and/or **characterized by** a lift drive (39) assigned with the basic clamping device (13a,b) for lifting and lowering, respectively, the basic clamping jaw (13a,b), and/or **characterized by** a lift drive assigned with the top jaw (14a,b).

7. Magnetic clamping device according to one of the preceding claims, **characterized in that** the top jaw (14a,b) carrying the clamping jaw (16a,b) moves radially in the clamping surface (11).

8. Magnetic clamping device according to one of the preceding claims, **characterized in that** the basic clamping jaw (13a,b) and/or the top jaw (14a,b) have at least one holding device (17a,b) for the clamping jaw (16a,b), and/or that the basic clamping jaw (13a,b) and/or the top jaw (14a,b) has/have at least two holding devices (17a,b) for the clamping jaw (16a,b), wherein the holding devices (17a,b) are arranged across the length of the basic clamping device (13a,b) and/or the top jaw (14a,b) in particular evenly spaced, and/or that in or close to each holding device (17a,b) a lift drive (39) for the clamping jaw (16a,b) is provided, and/or that the clamping jaw (16a,b) is designed attached releasably fixedly, in the holding device (17a,b), in particular inserted, clamped in, screwed in or introduced.

9. Magnetic clamping device according to one of the preceding claims, **characterized in that** the clamping jaw (16a,b) has an actuation mechanism (30) wherein the actuation mechanism (30) has at least one lifting element that can be actuated manually or by a motor, and a guiding element connected with the lifting element, transferring a movement of the lifting element in a lifting movement of the clamping jaw (16a,b) in opposite direction, and/or that the clamping jaw (16a,b) has an actuation mechanism (30), wherein the actuation mechanism (30) is configured with a piston element that can be pneumatically or hydraulically impinged and is, in particular, guided in a piston chamber (31), and a guiding element is provided connected with the piston element and transferring a movement of the piston element in a lifting movement of the clamping jaw (16a,b) in opposite direction.

10. Magnetic clamping device according to one of the preceding claims, **characterized in that** the lift drive has a disc (100) conveying a restricted guidance of the clamping jaw (16a,b), wherein the clamping jaw (16a,b) is coupled eccentrically to the disc (100) or a guide crank (102) surrounding the disc center (104) helically is provided for the clamping jaw (16a,b), and/or that the guide crank (102) merges in a guide path with constant radius or has a guide path with constant radius, and/or that the disc (100) is driven via a drawbar, wherein in particular the drawbar is arranged on the preferably radially moving basic clamping jaw (13a,b) and/or the top jaw (14a,b) or is connected with it or can be engaged with it, and/or that the disc (100) is configured as a toothed washer and the drawbar is provided as toothed rack (103) engaged in the toothed washer, and/or that the clamping jaw (16a,b) is attached in the disc center (104) and a transfer of a rotational movement of the disc (100) in a swivel movement of the clamping jaw (16a,b) is provided.

11. Magnetic clamping device according to one of the preceding claims, **characterized in that** a radial movement of the basic clamping jaw (13a,b) and/or the top jaw (14a,b) relatively to the clamping surface (11) can be transferred in a lifting movement of the clamping jaw (16a,b) orientated vertically to the radial movement relatively to the clamping surface (11), in particular a lifting movement from a lifted to a lowered position of the clamping jaw (16a,b) or vice versa.

12. Magnetic clamping device according to one of the preceding claims, **characterized by** a solenoid (91) with an armature (95) moving in an armature housing (93) when the solenoid (91) is electrified, wherein the armature (95) is configured as clamping jaw (16a,b) or carries the clamping jaw (16a,b), and/or that a return spring (92) is assigned with the armature (95) and the armature (95) moves, when the solenoid (91) is electrified, in opposite direction of the power direction of the return spring (92) in the armature housing (93), and/or that the lift drive (39) has a separate solenoid (91), and/or a coupling of the lift drive (39) of the clamping jaw (16a,b) with an electro-magnetic clamping means of the magnetic clamping device (10) is provided, wherein in particular by means of activating the magnetic clamping device (10) the clamping jaw (16a,b) can be lowered in a position in or below the clamping surface (11).

13. Method for centering a work piece (12) in the clamping surface (11) of a magnetic clamping device (10), in particular a magnetic clamping device (10) according to one of the preceding claims, comprising the steps:
(i) putting the work piece (12) on a clamping surface (11),
(ii)centering the work piece (12) in the clamping surface (11) by moving the clamping jaw (16a,b) towards the work piece (12) or an edge of the work piece (12),
(iii)electro-magnetic clamping of the work piece (12), **characterized by**
(iv) lowering the clamping jaw (16a,b) in a position in or below the plane of the clamping surface (11).

14. Method according to claim 13, **characterized in that** the step (iv) is carried out before step (iii), and/or that before step (iii) or (iv) a release of the clamping jaw (16a,b) and/or removal of the clamping jaw (16a,b) from the work piece (12) is provided, and/or before step (ii) a lifting of the clamping jaw (16a,b) from a position in or below the plane of the clamping surface (11) in a position on or above the clamping surface (11) is provided, and/or the centering is performed by radial moving the clamping jaw (16a,b) and/or a basic clamping jaw (13a,b) or top jaw (14a,b) carrying the clamping jaw (16a,b) and/or that a movement of the clamping jaw (16a,b) is performed by a separate drive, and/or that a radial movement of the basic clamping jaw (13a,b) and/or the top jaw (14a,b) relatively to the clamping surface (11) is transferred in a lifting or lowering, seen relatively to the clamping surface (11), movement of the clamping jaw (16a,b).

15. Method according to one of the claims 13 or 14, **characterized in that** a movement of the clamping jaw (16a,b) is derived from the movement of the basic clamping jaw (13a,b) and/or the top jaw (14a,b), and/or that a pneumatically, hydraulically, mechanically, magnetically, in particular electro-magnetically, electromotively or manually conveyed lifting movement and/or radial movement of the basic clamping jaw (13a,b), the top jaw (14a,b) and/or the clamping jaw (16a,b) is performed.

## Revendications

1. Dispositif de serrage magnétique comprenant une surface de serrage (11), au moins un moyen de serrage électromagnétique (19) destiné à serrer une pièce (12) dans la surface de serrage (11), et un dispositif de centrage (20) destiné à centrer la pièce (12), le dispositif de centrage (20) comportant au moins une mâchoire de base (13a,b) déplaçable dans la surface de serrage, **caractérisé en ce que** l'au moins une mâchoire de base (13a, b) est associée à une mâchoire de serrage (16a, b) mobile par rapport à la surface de serrage (11) dans une position abaissée ou soulevées.

2. Dispositif de serrage magnétique selon la revendication 1, **caractérisé en ce qu'**une mâchoire rapportée (14a,b) est disposée entre la mâchoire de base (13a,b) et la mâchoire de serrage (16a,b) et/ou **en ce que** la mâchoire de serrage (16a,b) est configurée pour être mobile par des moyens pneumatiques, hydrauliques, mécaniques, magnétiques, notamment électromagnétiques, électromoteurs ou manuellement et/ou **en ce que** la mâchoire de serrage comporte un entraînement séparé, en particulier un entraînement de levage pneumatique, hydraulique, mécanique, magnétique, en particulier électromagnétique, électromoteur ou manuel.

3. Dispositif de serrage magnétique selon l'une des revendications précédentes, **caractérisé en ce que** le mouvement de la mâchoire de serrage (16a,b) peut être dérivé d'un entraînement associé au dispositif de serrage magnétique (10), communiquant un mouvement radial de la mâchoire de serrage de base (13a,b) ou de la mâchoire rapportée (14a,b) et/ou **en ce que** la mâchoire de serrage de base (13a,b), la mâchoire rapportée (14a,b) et/ou la mâchoire de serrage (16a,b) sont disposés de manière mobile radialement dans et/ou au-dessous de la surface de serrage (11) et/ou **en ce que** la mâchoire rapportée (14a,b) et/ou la mâchoire de serrage (16a,b) ou une unité formée de la mâchoire rapportée (14a,b) et de la mâchoire de serrage (16a,b) sont disposées solidairement, de manière amovible, dans la mâchoire de serrage de base (13a,b) et/ou la mâchoire rapportée (14a,b).

4. Dispositif de serrage magnétique selon l'une des revendications précédentes, **caractérisé en ce que** l'entraînement associé à la mâchoire de serrage (16a,b) ou un mécanisme d'actionnement (30) est disposé dans la mâchoire de serrage de base (13a,b) et/ou la mâchoire rapportée (14a,b).

5. Dispositif de serrage magnétique selon l'une des revendications précédentes, **caractérisé en ce que** le dispositif de centrage (20) est constitué de la mâchoire de serrage de base (13a,b), de la mâchoire rapportée (14a,b) et/ou de la mâchoire de serrage (16a,b) et/ou **caractérisé par** un entraînement de levage (39) associé au dispositif de centrage (20) pour soulever et abaisser le dispositif de centrage (20).

6. Dispositif de serrage magnétique selon l'une des revendications précédentes, **caractérisé en ce que** le dispositif de centrage est disposé de façon mobile radialement dans ou au-dessous de la surface de serrage (11), en particulier la mâchoire de serrage (16a,b) pouvant être soulevé dans une position dans ou au-dessus du plan de la surface de serrage (11) et/ou **caractérisé par** un entraînement de levage (39) associé à la mâchoire de serrage de base (13a,b) pour soulever ou abaisser la mâchoire de serrage de base (13a,b) et/ou **caractérisé par** un entraînement de levage associé à la mâchoire rapportée (14a,b).

7. Dispositif de serrage magnétique selon l'une des revendications précédentes, **caractérisé en ce que** la mâchoire de serrage (16a,b) supportant la mâchoire rapportée (14a,b) est mobile radialement dans la surface de serrage (11).

8. Dispositif de serrage magnétique selon l'une des revendications précédentes, **caractérisé en ce que** la mâchoire de serrage de base (13a,b) et/ou la mâchoire rapportée (14a,b) comporte au moins un logement (17a,b) destiné à la mâchoire de serrage (16a,b) et/ou **en ce que** la mâchoire de serrage de base (13a,b) et/ou la mâchoire rapportée (14a,b) comportent au moins deux logements (17a,b) destinés à la mâchoire de serrage (16a,b), les logements (17a,b) sont prévus en particulier avec un espacement régulier sur la longueur radiale de la mâchoire de serrage de base (13a,b) et/ou de la mâchoire rapportée (14a,b) et/ou **en ce que**, dans ou pour chaque logement (17a,b) il est prévu un entraînement de levage (39) destiné à la mâchoire de serrage (16a,b) et/ou **en ce que** la mâchoire de serrage (16a,b) peut être configuré pour être monté, en particulier inséré, enserré, vissé ou enfiché solidairement de manière amovible dans le logement (17a,b).

9. Dispositif de serrage magnétique selon l'une des revendications précédentes, **caractérisé en ce que** la mâchoire de serrage (16a,b) comprend un mécanisme d'actionnement (30), le mécanisme d'actionnement (30) comportant au moins un élément de levage qui peut être actionné manuellement ou par moteur et un élément de guidage qui est relié à l'élément de levage et qui convertit un mouvement de l'élément de levage en un mouvement de levage de sens opposé de la mâchoire de serrage (16a,b) étant prévu, et/ou **en ce que** la mâchoire de serrage (16a,b) comporte un mécanisme d'actionnement (30), le mécanisme d'actionnement (30) étant configuré avec un élément de piston à commande pneumatique ou hydraulique, guidé notamment dans une chambre de piston (31), et un élément de guidage qui est relié à l'élément de piston et qui convertit le mouvement de l'élément de piston en un mouvement de levage de sens opposé de la mâchoire de serrage (16a,b) étant prévu.

10. Dispositif de serrage magnétique selon l'une des revendications précédentes, **caractérisé en ce que** l'entraînement de levage comporte un disque (100) qui communique un guidage forcé de la mâchoire de serrage (16a,b), la mâchoire de serrage (16a,b) étant reliée de façon articulée excentriquement au disque (100) ou une coulisse de guidage (102) qui entoure en spirale le centre (104) du disque, qui est destinée à la mâchoire de serrage (16a,b) étant prévue et/ou **en ce que** la coulisse de guidage (102) se transforme en une piste de guidage de rayon constant ou comporte une piste de guidage de rayon constant, et/ou **en ce que** le disque (100) peut être entraîné par le biais d'une bielle de traction, en particulier la bielle de traction étant disposée sur la mâchoire de serrage de base (13a, b) et/ou la mâchoire rapportée (14a,b) de préférence déplaçable radialement ou étant reliée à celle-ci ou pouvant être amenée en engagement avec celle-ci et/ou **en ce que** le disque (100) est réalisé sous la forme d'un disque denté et la bielle de traction est prévue sous la forme d'une crémaillère (103) en engagement avec le disque denté et/ou **en ce que** la mâchoire de serrage (16a,b) est fixé au centre (104) du disque et une conversion d'un mouvement de rotation du disque (100) en un mouvement de pivotement de la mâchoire de serrage (16a, b) est prévu.

11. Dispositif de serrage magnétique selon l'une des revendications précédentes, **caractérisé en ce qu'**un mouvement radial de la mâchoire de serrage de base (13a,b) et/ou la mâchoire rapportée (14a,b) par rapport à la surface de serrage (11) peut être converti en un mouvement de levage, orienté perpendiculairement au mouvement radial, de la mâchoire de serrage (16a,b) par rapport à la surface de serrage (11), en particulier un mouvement de levage depuis une position soulevée dans une position abaissée de la mâchoire de serrage (16a,b) ou vice-versa.

12. Dispositif magnétique de serrage selon l'une des revendications précédentes, **caractérisé par** un électro-aimant (91) qui comporte un induit (95) mobile dans une chambre d'induit (93) lors de l'excitation de l'électro-aimant (91), l'induit (95) étant configuré sous la forme d'une mâchoire de serrage (16a,b) ou supportant la mâchoire de serrage (16a,b) et/ou en ce que l'induit (95) est associé à un ressort de rappel (92) et l'induit (95) est mobile dans la chambre d'induit (93) lors l'excitation de l'électro-aimant (91) dans le sens opposé au sens de la force du ressort de rappel (92) et/ou en ce que l'entraînement de levage (39) comporte un électro-aimant séparé (91) et/ou en ce qu'un accouplement de l'entraînement de levage (39) de la mâchoire de serrage (16a,b) est muni d'un moyen de serrage électromagnétique du dispositif de serrage magnétique (10), en particulier la mâchoire de serrage (16a,b) étant abaissée dans une position dans ou au-dessous de la surface de serrage (11) lors de l'activation du dispositif de serrage magnétique (10).

13. Procédé de centrage d'une pièce (12) dans la surface de serrage d'un dispositif de serrage magnétique (10), en particulier un dispositif de serrage magnétique (10) selon l'une des revendications précédentes, comprenant les étapes consistant à
(i) placer la pièce (12) sur une surface de serrage (11),
(ii)centrer la pièce dans la surface de serrage (11) par déplacement de la mâchoire de serrage (16a,b) sur la pièce (12) ou un bord de la pièce (12) pour
(iii)effectuer un serrage électromagnétique de la pièce (12), **caractérisé par** l'étape consistant à
(iv)abaisser la mâchoire de serrage (16a,b) dans une position dans ou au-dessous du plan de la surface de serrage (11).

14. Procédé selon la revendication 13, **caractérisé en ce que** l'étape (iv) est réalisée avant l'étape (iii) et/ou **en ce qu'**il est prévu, avant l'étape (iii) ou (iv), une relaxation de la mâchoire de serrage (16a,b) et/ou une suppression la mâchoire de serrage (16a,b) vis-à-vis de la pièce (12) et/ou **en ce qu'**il est prévu, avant l'étape (ii), un soulèvement de la mâchoire de serrage (16a,b) d'une position dans ou au-dessous du plan de la surface de serrage (11) dans une position sur ou au-dessus de la surface de serrage (11) et/ou que le centrage est effectué par déplacement radial de la mâchoire de serrage (16a,b) et/ou d'une mâchoire de serrage de base (13a,b) ou mâchoire rapportée (14a, b) supportant la mâchoire de serrage (16a,b) et/ou **en ce que** le mouvement de la mâchoire de serrage (16a,b) est effectué par un entraînement séparé et/ou **en ce qu'**un mouvement radial de la mâchoire de serrage de base (13a,b) et/ou de la mâchoire rapportée (14a,b) relativement à la surface de serrage (11) est converti en un mouvement de soulèvement ou d'abaissement de la mâchoire de serrage (16a,b) relativement à la surface de serrage (11).

15. Procédé selon l'une des revendications 13 ou 14, **caractérisé en ce qu'**un mouvement de la mâchoire de serrage (16a,b) est dérivé du mouvement de la mâchoire de serrage de base (13a,b) et/ou de la mâchoire d rechange (14a,b) et/ou **en ce qu'**un mouvement de levage et/ou un mouvement radial de la mâchoire de serrage de base (13a,b), la mâchoire rapportée (14a,b) et/ou la mâchoire de serrage (16a,b) sont effectués par moyens pneumatique, hydraulique, mécanique, magnétique, en particulier électromagnétique, électromoteur ou manuellement.
